(19) Europäisches Patentamt
European Patent Office
Office européen des brevets

(11) **EP 2 224 765 A2**

(12) **EUROPEAN PATENT APPLICATION**

(43) Date of publication:
**01.09.2010 Bulletin 2010/35**

(51) Int Cl.:
***H04W 16/14*** (2009.01)

(21) Application number: **10001670.8**

(22) Date of filing: **18.02.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **25.02.2009 JP 2009041664**

(71) Applicant: **Hitachi, Ltd.**
**Chiyoda-ku**
**Tokyo 100-8280 (JP)**

(72) Inventors:
• **Fujishima, Kenzaburo**
**Tokyo 100-8220 (JP)**
• **Uwano, Koki**
**Tokyo 100-8220 (JP)**
• **Takada, May**
**Tokyo 100-8220 (JP)**

(74) Representative: **Strehl Schübel-Hopf & Partner**
**Maximilianstrasse 54**
**80538 München (DE)**

(54) **Radio communication system, base station apparatus, gateway apparatus, and remote controller**

(57) A radio communications system includes, in base stations, or nodes nearer to a core network than the base stations, a terminal distribution checking unit, a unit of determining whether to execute intercell interference reduction based on the result of the checking, a coordination unit which executes intercell interference reduction between base stations in corporation with each other.

*FIG. 6*

## Description

FIELD OF THE INVENTION

The present invention relates to a radio communications system in which plural base stations perform transmission/reception at the same frequency.

BACKGROUND OF THE INVENTION

First, there is described hereinafter intercell interference occurring to a radio communications system.

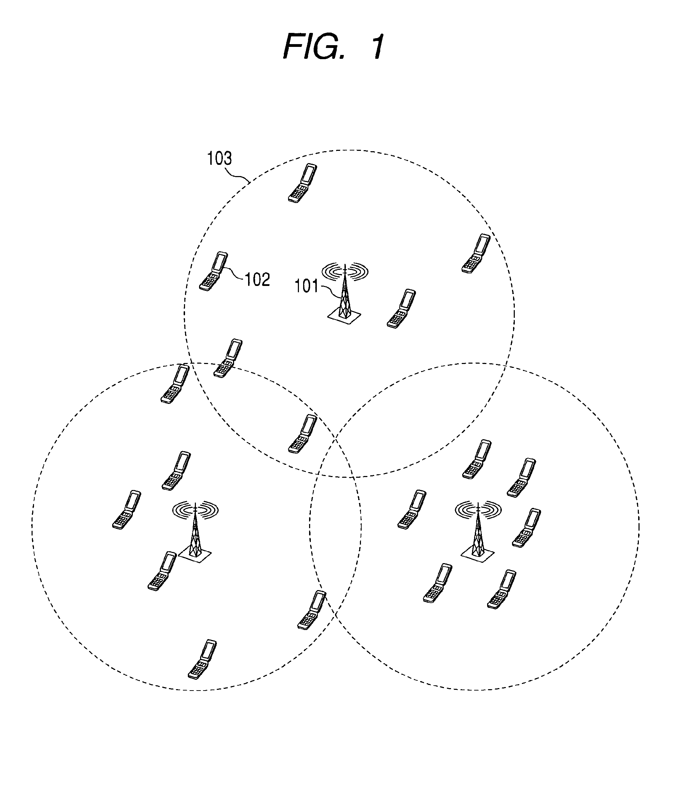

FIG. 1 is view showing a radio communications system. A base station 101 transmits a radio signal to plural terminals 102, respectively, and receives a radio signal from the plural the terminals 102, respectively. A set of placements of the terminals 102, in which the base station 101 can communicate with the terminal 102 via a radio signal is a cell 103. The range of the cell 103 is dependent on propagation loss of a radio signal, interference between radio signals, that is, interference caused by signals to/from terminals belonging to other cells, respectively, and so forth. In FIG. 1, the range of the cell 103 is expressed by a circle for brevity. A portion where two circles overlap each other is susceptible to occurrence of the interference between radio signals. That is, it can be that the portion where two circles overlap each other is an area of intense intercell interference. Communication quality of terminals present in the vicinity of a boundary between the cells undergoes deterioration due to the intercell interference.

Now, a conventional technology for reduction in intercell interference is described.

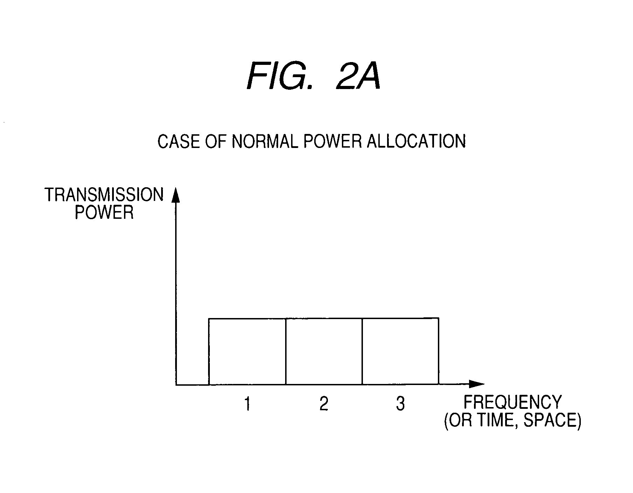

FIG. 2A shows a transmission power spectrum in the case where reduction in intercell interference is not intended. The horizontal axis indicates fractional resource index, and the vertical axis indicates a transmission power for every fractional resource. For a fractional resource axis, time, frequency, or space can be considered as a candidate.

If time is taken as an example, a time frame can be cited. As a time frame occurs on the order of around 1000 times per second, a transmission power may be defined for each of all time frames, however, as shown in an example of FIG. 2A, transmission powers corresponding to three time frames, respectively, may be first defined, and it may be defined that time frames whose number is divided by three, having a remainder equal in number, are treated as an identical fractional resource to be defined as corresponding to an identical transmission power.

If frequency is taken as an example, a sub-band that is a portion of a system-band can be cited. In the case of the example shown in FIG. 2A, the system-band in whole is split into three portions as three sub-bands, thereby defining a transmission power for every sub-band.

If space is taken as an example, a directional beam can be cited. In the case of the example shown in FIG. 2A, a cell formed by a base station is spatially split into three portions, thereby defining a transmission power as defined for every directional beam defined for every fractional space. For example, a transmission power for every sector antenna is defined as shown in FIG. 2A.

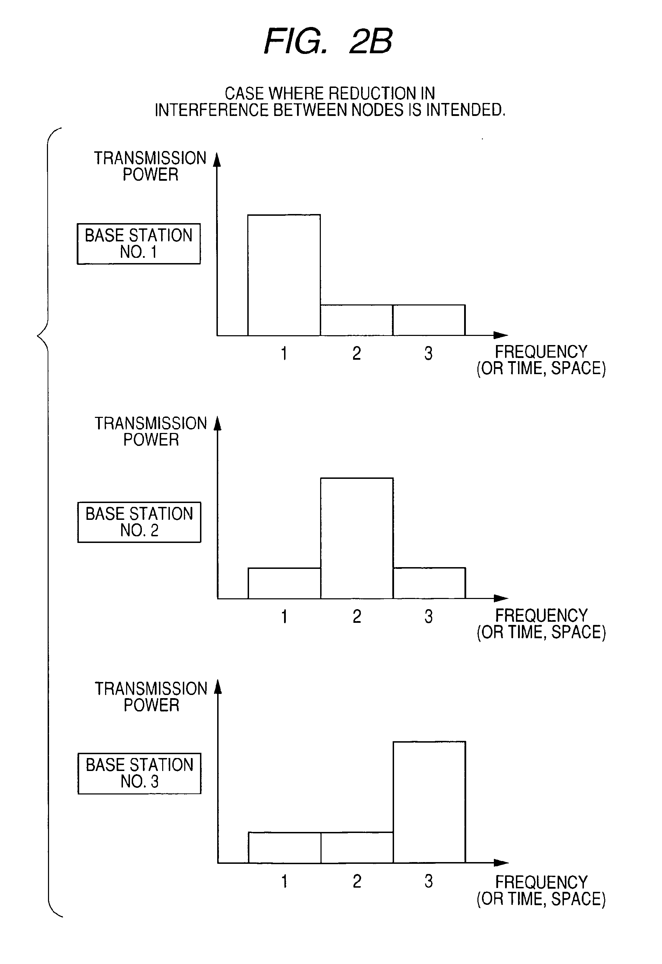

In the case of the example shown in FIG. 2A, even if any of time, frequency, and space is selected the fractional resource axis, it does not follow that a fractional resource low in the intercell interference will occur since transmission powers for the respective fractional resources are equal to each other. FIG. 2B shows an example where the transmission powers for the respective fractional resources are provided with a gradient in order to cause occurrence of the fractional resource low in the intercell interference.

FIG. 2B shows a transmission power spectrum in the case where reduction in intercell interference is intended.

In FIG. 2B, the vertical axis, and the horizontal axis each are the same in significance as those of FIG. 2A. FIG. 2B differs from FIG. 2A only in that a transmission power spectrum for every fractional resource varies from a base station to another. As a result, a fractional resource low in the intercell interference can be generated, and by allocating the fractional resource low in the intercell interference to a terminal at a cell boundary where intense intercell interference is received, it is possible to enhance the communication quality of the terminal at the cell boundary. In the case of the example in FIG. 2B, a transmission power of a fractional resource 1 of a base station No. 1 is increased by reducing respective transmission powers of fractional resources 2, 3 of the base station No. 1. Transmission powers of respective fractional resources 1 of base stations Nos. 2, 3 are decreased under the same concept. As a result, while the respective fractional resources 1 of the base stations Nos. 2, 3 have a transmission signal susceptible to have difficulty in reaching the neighborhood of a cell boundary, the fractional resource 1 of the base station No. 1 has a transmission signal reaching the neighborhood of a cell with ease. Accordingly, a terminal in communication with the base station No. 1, and positioned in the neighborhood of the cell boundary will be able to communicate in an environment of low intercell interference if use is made of the fractional resource 1, thereby improving communication quality. Similarly, a terminal in communication with the base station No. 2, and positioned in the neighborhood of the cell boundary, a terminal in communication with the base station No. 3, and positioned in the neighborhood of the cell boundary will be able to communicate in an environment of low intercell interference if use is made of the fractional resource 2, and the fractional resource 3, respectively, thereby improving communication quality. In this connection, a technology whereby frequency is adopted as the fractional resource axis is well known as FFR {Fractional Frequency Reuse (3GPP2, C30 - 20060327 - 023R2, Naga Bhshan, "QUALCOMM Proposal for 3GPP2 Air Interface Evolution Phase 2", pp. 125, 2006/3}.

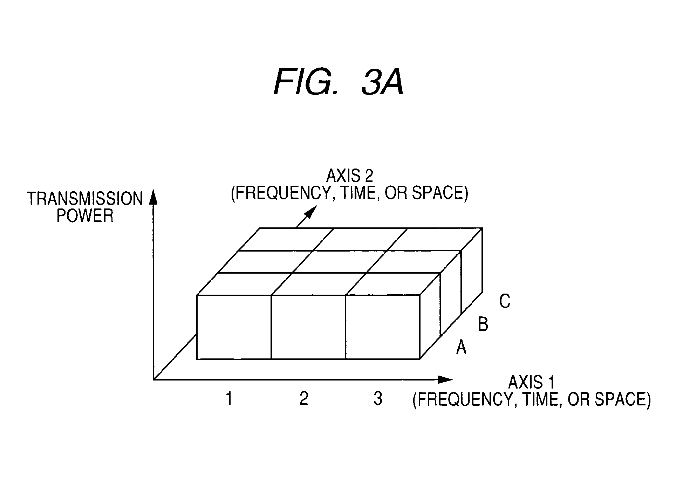

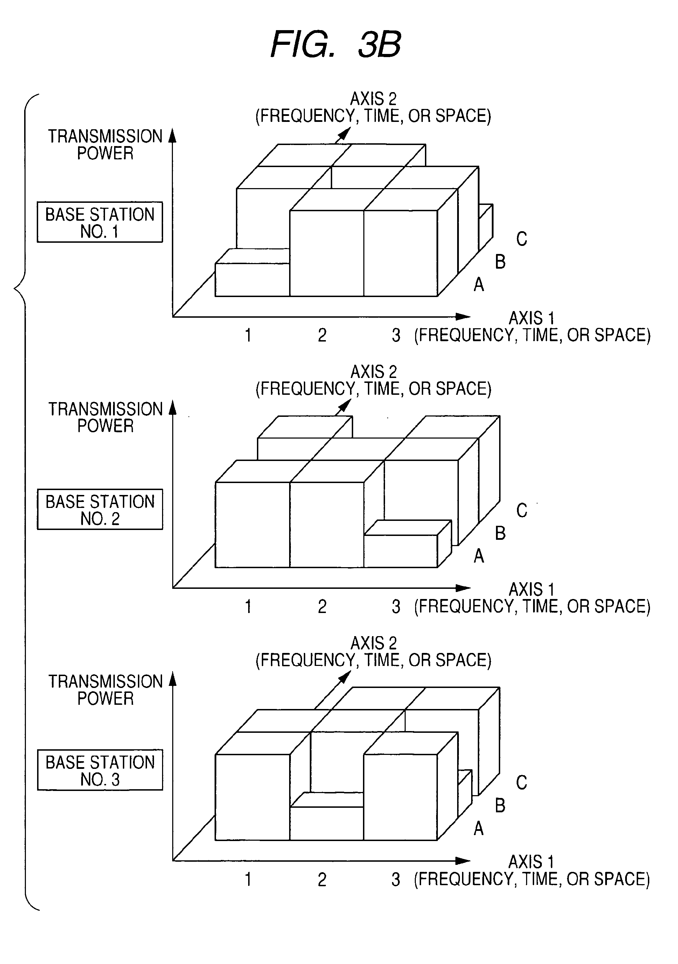

Such a concept as described above is applicable even to the case where the number of the fractional resource axes is expanded to two or three. FIGs. 3A, 3B each show an example of the case where the number of the fractional resource axes is two. In the case of the number of the fractional resource axes being two, two fractional resources are selected out of three fractional resources including time, frequency, and space to be allocated to the respective axes.

In the case of an example shown in FIG. 3A, respective transmission powers of combinations of all the fractional resources are equal to each other, so that it is impossible to generate a fractional resource that is low in the intercell interference, however, in the case of an example shown in FIG. 3B, distribution of transmission powers between the fractional resources varies from one base station to another, so that it is possible to generate the fractional resource that is low in the intercell interference.

Now, an advantage of increasing the number of the fractional resource axes is described hereinafter. Attention is focused on, for example, a terminal receiving intense intercell interference from the base station No. 2, and in communication with the base station No. 1. To put it another way, the fractional resource of the terminal, low in the intercell interference, can be a combination of fractional resources where a transmission power from the base station No. 2 is weak, and a transmission power from the base station No. 1 is strong. For such a combination, three different way such as (1, B), (2, C) and (3, A) can be cited. In the radio communications system, since the communication quality of a radio channel changes every moment due to the effects of phasing, and shadowing, and the behavior of the fractional resource varies from one fractional resource to another, the terminal is able to make selective use of a fractional resource excellent in the communication quality among the combination (1, B), (2, C) and (3, A). In other words, an increase in the number of the fractional resource axes will contribute to an increase in selection diversity branches, and owing to advantageous effects thereof, the communication quality of the terminal can be enhanced.

SUMMARY OF THE INVENTION

It is an object of the invention to effectively execute reduction in intercell interference leading to deterioration in communication quality of a radio communications system by preventing deterioration in frequency utilization efficiency of the system as a whole as much as possible.

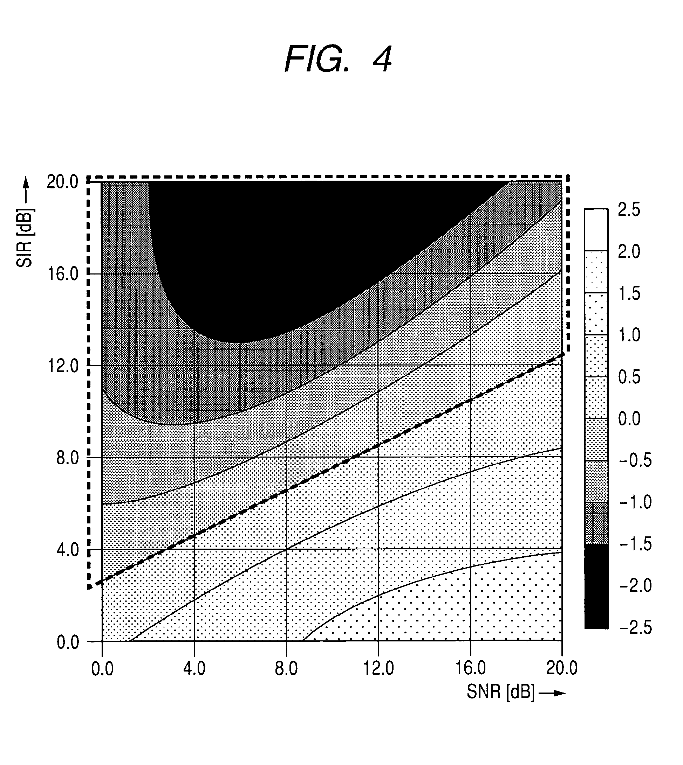

In FIG. 4, there are shown results of analysis on the degree of improvement and deterioration in frequency utilization efficiency, due to execution of intercell interference reduction. The horizontal axis indicates received SNR at the terminal, and the vertical axis indicates received SIR at the terminal. This graph shows an improvement degree in the frequency utilization efficiency (bit/s/Hz), due to the execution of the intercell interference reduction. In the graph, a minus improvement degree represents a deterioration degree.

As evaluation conditions, it is assumed that the number of base station is 2, the number of terminals is 4, the number of frequency sub-bands is 4, a transmission power ratio among the four sub-bands is 2.5 : 2.5 : 2.5 : 2.5 when no intercell interference reduction is executed, and the transmission power ratio when the intercell interference reduction is executed is 1.0 : 7.0 : 1.0 : 1.0 among preferred base stations, and 1.0 : 1.0 : 7.0 : 1.0 among interference base stations, respectively. SIR is defined as a ratio of a signal reception power from a preferred base station of a sub-band having a transmission power equal to that of an interference base station to a signal reception power from the interference base station, and SNR is defined as a ratio of a noise power at a sub-band with its transmission power 1.0. Further, it is assumed that, with respect to all the four terminals, the received SIRs as well as the received SNRs are equal to each other.

The following four points are evident from the results shown in FIG. 4.

(a) Because the noise power is high in an environment where both SIR and SNR are low (in the lower left region in FIG. 4), an effect of improvement in frequency utilization efficiency is small even if the intercell interference is reduced. (b) Because interference is a dominant cause of deterioration in communication quality in an environment where SNR is high, and SIR is low (in the lower right region in the figure), the effect of improvement in frequency utilization efficiency, due to reduction in the intercell interference, is significant.

(c) Because interference power is small in an environment where SIR is high (in the upper region in the figure), the effect of improvement in frequency utilization efficiency, due to reduction in the intercell interference, is small, and since power distribution among the sub-bends is provided with a gradient, the frequency utilization efficiency rather undergoes deterioration.

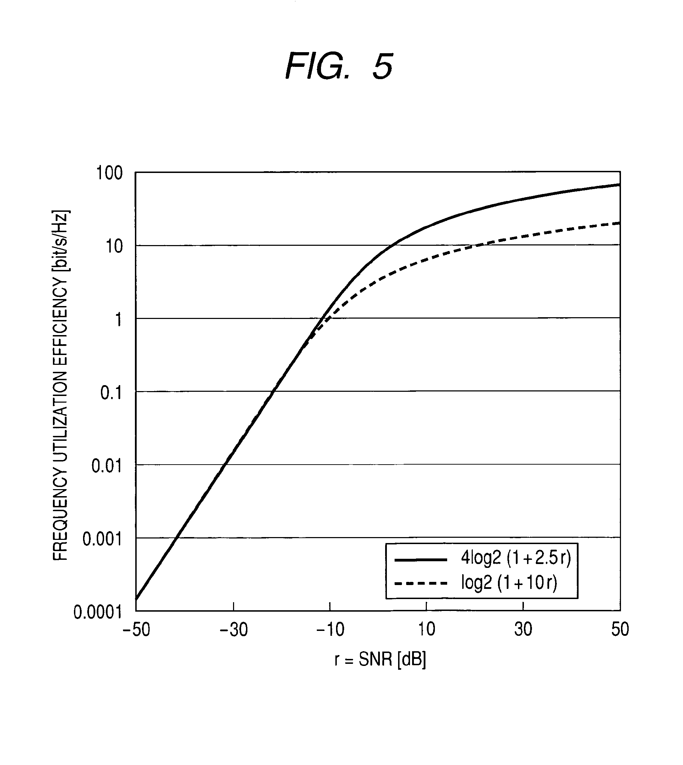

The reason why the frequency utilization efficiency deteriorates when the power distribution among the sub-bends is provided with a gradient can be explained about by taking the following extreme case as an example. For brevity, a single base station model is considered. If channel capacity in the case of the transmission power ratio among the four sub-bands being 2.5:2.5:2.5:2.5 is compared with channel capacity in the case of the transmission power ratio among the four sub-bands being 10.0:0.0:0.0:0.0, this can be expressed as comparison of $4\log 2 (1 +2.5\gamma)$ with $\log2 (1 + 10\gamma)$. Herein, $\gamma$ represents the received SNR in the case of transmission power 1.0. FIG. 5 is a graph in which the horizontal axis indicates $\gamma$, showing comparison results of frequency utilization efficiency. Thus, even if the total power is distributed only to one location, an increase in frequency utilization efficiency will occur only in terms of logarithm thereof, so that it is more advantageous to equally distribute power to thereby linearly increase the frequency utilization efficiency. For this reason, the frequency utilization efficiency deteriorates when the power distribution among the sub-bends is provided with a gradient

It has become evident from review results shown in FIGs. 4, 5, respectively, that the effect of improvement in frequency utilization efficiency, due to the execution of the intercell interference reduction, is obtained if a number of terminals are distributed at a cell boundary (in the case of many low SIR terminals), however, if a number of terminals are distributed at locations other than the cell boundary (in the case of many high SIR terminals), power distribution among the fractional resources is provided with a gradient in order to execute reduction in the intercell interference, so that the frequency utilization efficiency will rather undergo deterioration.

In order to prevent deterioration in the frequency utilization efficiency of the system as a whole, occurring as described above, the invention provides a radio communications system in which a decision on whether or not intercell interference reduction is to be executed is made according to distribution of terminals, and in the case of execution, coordination among base stations is made before execution.

Points for solving problems are the following three points:

(1) For the base station to know distribution of the terminals;
(2) For the base station to determine whether or not the intercell interference reduction is to be executed according to the results of checking terminal distribution; and further
(3) To have a mechanism for enabling the plural the base stations to cooperate with each other to thereby execute reduction in the intercell interference because it is necessary for the plural the base stations to cooperate with each other before execution as shown in the examples of FIG. 2B, and FIG. 3B, respectively.

In order to realize those point, there is provided, a radio communications system in which unit for checking terminal distribution on a base station-by-base station basis, unit for determining whether or not the intercell interference reduction is to be executed on the basis of results of the checking, and coordination unit for implementing the intercell interference reduction through cooperation among the base stations are installed a node closer to a core network than the base station, or the terminal is.

The radio communications system according to the present invention has an advantageous effect in that reduction in the intercell interference leading to deterioration in communication quality can effectively executed. Although the reduction in the intercell interference can improve the communication quality of the terminal at the cell boundary, this can raise a possibility that the frequency utilization efficiency of the system as a whole undergoes deterioration. If the reduction in the intercell interference is suitably executed according to distribution of terminals in such a way as to prevent deterioration in the frequency utilization efficiency of the system as a whole as much as possible, this will enable deterioration in the frequency utilization efficiency of the system as a whole to be prevented.

BRIEF DESCRIPTION OF THE DRAWINGS

FIG. 1 is view showing a common radio communications system;
FIG. 2A is a view showing an example of a transmission power spectrum of a base station having no intention of executing reduction in intercell interference;
FIG. 2B is a view showing an example of a transmission power spectrum of a base station having the intention of executing reduction in intercell interference;
FIG. 3A is a view showing an example of another transmission power spectrum of a base station having no intention of executing reduction in intercell interference;
FIG. 3B is a view showing an example of another transmission power spectrum of a base station having the intention of executing reduction in intercell interference;
FIG. 4 is a view showing results of analysis on effects of reduction in the intercell interference;
FIG. 5 is a graph showing results of analysis on frequency utilization efficiency against evenness of the transmission power spectrum of a base station;
FIG. 6 is a view showing an example of the configuration of a radio communications system according to the present invention;
FIG. 7 is a view showing a base station according to a first embodiment of the invention;
FIG. 8A is a view showing an example of information collected from the terminal, by the base station according to the invention;
FIG. 8B is a view showing another example of the information collected from the terminal, by the base station according to the invention;
FIG. 8C is a view showing still another example of the information collected from the terminal, by the base station according to the invention;
FIG. 8D is a view showing a further example of the information collected from the terminal, by the base station according to the invention;
FIG. 9 is a view showing an example of the operation of terminal distribution checking unit according to the invention;

FIG. 10A is a view showing an example of an output of the terminal distribution checking unit according to the invention;

FIG. 10B is a view showing an example of another output of the terminal distribution checking unit according to the invention;

FIG. 10C is a view showing an example of still another output of the terminal distribution checking unit according to the invention;

FIG. 10D is a view showing an example of a further output of the terminal distribution checking unit according to the invention;

FIG. 11 is a view showing an operation example of intercell interference reduction execution determination unit according to the invention;

FIG. 12 is a view showing an example of an output of the intercell interference reduction execution determination unit according to the invention;

FIG. 13A is a schematic representation showing a concept underlying a method for setting a threshold for use in the intercell interference reduction execution determination unit according to the invention;

FIG. 13B is a schematic representation showing the concept underlying another method for setting the threshold for use in the intercell interference reduction execution determination unit according to the invention;

FIG. 14 is a flow chart of intercell interference reduction coordination unit according to the invention;

FIG. 15 is another flow chart of the intercell interference reduction coordination unit according to the invention;

FIG. 16 is still another flow chart of the intercell interference reduction coordination unit according to the invention;

FIG. 17 is a view showing an example of a neighbor list according to the invention, held by the base station, and so forth;

FIG. 18 is a sequence chart for control, according to the first embodiment of the invention;

FIG. 19 is a view showing flows of message exchange, based on the sequence chart for control, according to the first embodiment of the invention;

FIG. 20 is view showing a base station and a gateway, or a remote controller, according to a third embodiment as well as a second embodiment of the invention;

FIG. 21 is a view showing an example of flag management performed by the gateway, or the remote controller, according to the third embodiment as well as the second embodiment of the invention;

FIG. 22 is a sequence chart according to the third embodiment as well as the second embodiment of the invention; and

FIG. 23 is a view showing the configuration of a radio communications system according to the third embodiment of the invention.

FIG. 24 shows a configuration in case of a base station according to an embodiment of the invention.

FIG. 25 shows a configuration in case of a gate way and a base station according to an embodiment of the invention.

DETAILED DESCRIPTION OF THE PREFERRED EMBODIMENTS

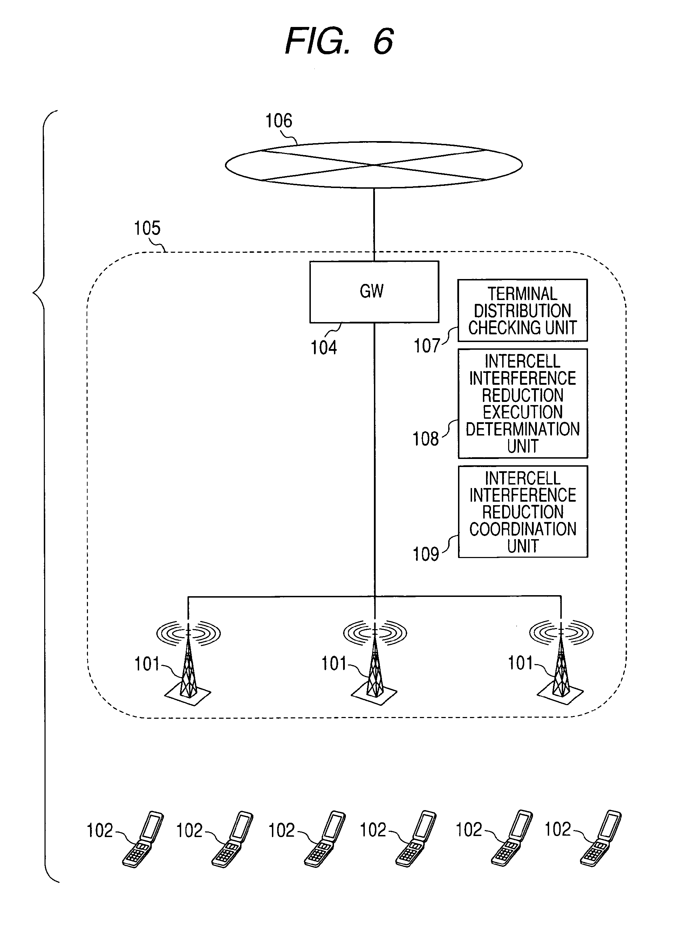

FIG. 6 shows a system configuration according to the present invention. If a radio access network is made up of one or plural base stations 101, one or plural terminals 102, in radio communication with one of the base stations 101, and a gateway 104, the radio access network incorporating a backhaul network 105 (excluding the terminals 102) in which a terminal distribution checking unit 107, an intercell interference reduction execution determination unit 108, and an intercell interference reduction coordination unit 109 are provided, this represents the best mode for carrying out the present invention. Further, as nodes where those three units are mounted, respectively, three types of nodes including the base station 101, the gateway 104, and a remote controller for performing maintenance of the base station 101 can be cited. Embodiments of the invention, in which those three units are mounted in the three types of the nodes, respectively, will be elucidated with reference to first to third embodiments later on in the present description. Incidentally, the gateway 104 is connected to a core network 106, but the core network 106 is unrelated to the invention.

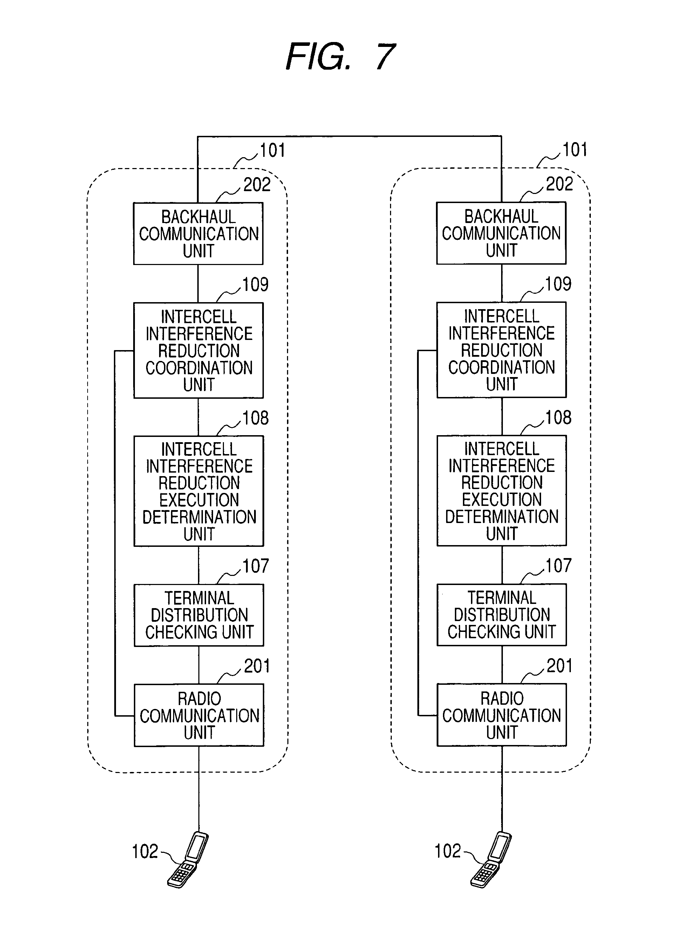

FIG. 7 shows a base station according to a first embodiment of the invention. This embodiment represents the case where the base station 101 is provided with the terminal distribution checking unit 107, the intercell interference reduction execution determination unit 108, and the intercell interference reduction coordination unit 109. With the present embodiment, reduction in the intercell interference can be achieved without the aid of the gateway 104, so that the present embodiment has an advantage in that the invention can be implemented without burdening the gateway 104 with a load. However, the present embodiment has a drawback in that there occurs an increase in process load of the base station 101, and an increase in communication using a control signal, for implementing intercell interference reduction through coordination between the base stations 101.

The base station 101 is provided with a radio communication unit 201 for execution of radio communication with the terminal 102, the terminal distribution checking unit 107 for checking terminal distribution on the basis of a result of the radio communication with the terminal 102, the intercell interference reduction execution determination unit 108 for determining whether or not the intercell interference reduction is to be executed, the intercell interference reduction coordination unit 109 having a function for controlling whether or not the intercell interference reduction is to be executed by the base station 101 itself on the basis of results of determination by the intercell interference reduction execution determination unit 108 of the base station 101 itself, results of determination by the intercell interference reduction execution determination unit 108 of other base stations, and an execution state of the intercell interference reduction by the base station 101 itself, a function for exchanging control information on the intercell interference reduction execution with those other base stations, a function for controlling the execution state of the intercell interference reduction by the base station 101 itself, and a function for indicating whether or not the intercell interference reduction is executed to the radio communication unit 201 of the base station 101 itself, and a backhaul communication unit 202 for executing communication with those other base stations, and the gateway 104.

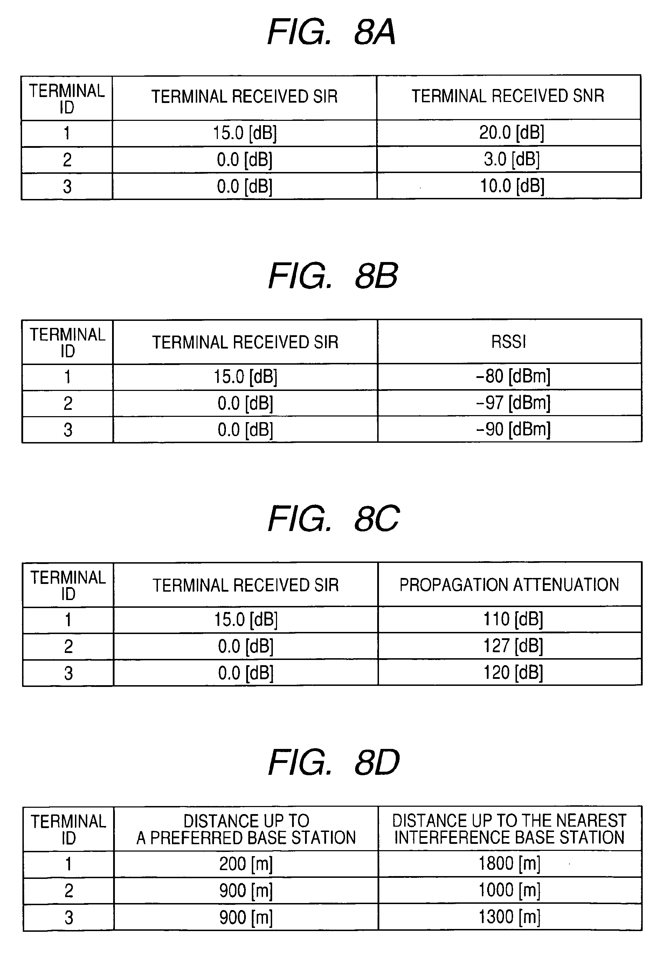

The radio communication unit 201 executes radio communication with the terminal 102 in accordance with a radio I/F (for example, Non-patent Document 3) of the radio communication protocol. This is realized with the use of a radio antenna for communication, an analog circuit for conversion of a carrier-band radio signal, and a baseband radio signal, and a logic circuit (ASIC, and FPGA) for taking out data of a received signal, and a control signal out of the baseband radio signal, or a program (DSP, and CPU). The control signal will be described in detail with reference to FIGs. 8A to 8D later on, and the radio communication unit 201 notifies the content of the control signal to the terminal distribution checking unit 107. Further, the radio communication unit 201 holds a transmission power profile as shown in FIGs. 2A and 2B, and FIGs. 3A and 3B, executing switchover between FIGs. 2A and 2B, or switchover between FIGs. 3A and 3B.

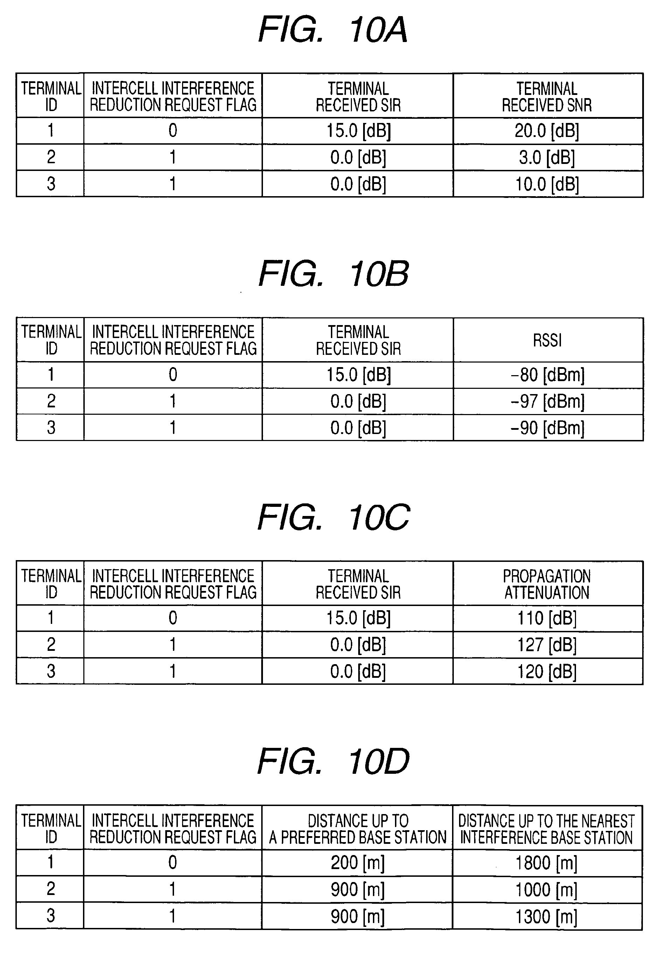

The terminal distribution checking unit 107 can be realized by use a program (DSP, and CPU). The terminal distribution checking unit 107 generates a record which is to be referred to by the intercell interference reduction execution determination unit 108 on the basis of the relevant measurement result, and the control signal, outputted by the radio communication unit 201. The record will be described in detail with reference to FIGs. 10A to 10D later on.

The intercell interference reduction execution determination unit 108 can be realized by use a program (DSP, and CPU). The intercell interference reduction execution determination unit 108 generates simple information which is to be referred to by the intercell interference reduction coordination unit 109, that is, information on whether or not the intercell interference reduction is to be executed through coordination between the base stations on the basis of the record generated by the terminal distribution checking unit 107.

The intercell interference reduction coordination unit 109 has the following four functions, any of which can be realized by use a program (DSP, and CPU).

(1) the function for making a final determination on whether or not the intercell interference reduction be executed by the base station 101 itself on the basis of the results of determination by the intercell interference reduction execution determination unit 108 of the base station 101 itself, the results of determination by the intercell interference reduction execution determination unit 108 of those other base stations, and the execution state of the intercell interference reduction by the base station 101 itself,(2) the function for exchanging the control information on the intercell interference reduction execution with those other base stations,

(3) the function for controlling the execution state of the intercell interference reduction by the base station 101 itself, and(4) the function for indicating whether or not the intercell interference reduction is executed to the radio communication unit 201 of the base station 101 itself.

The backhaul communication unit 202 communicates with those other base stations, and the gateway 104. The effect of the present invention remains unchanged regardless of the adoption of wire communication or radio communication. The backhaul communication unit 202 can be realized by use of network interface hardware in the case of wire communication, and by use of the same component as the radio communication unit 201 in the case of radio communication.

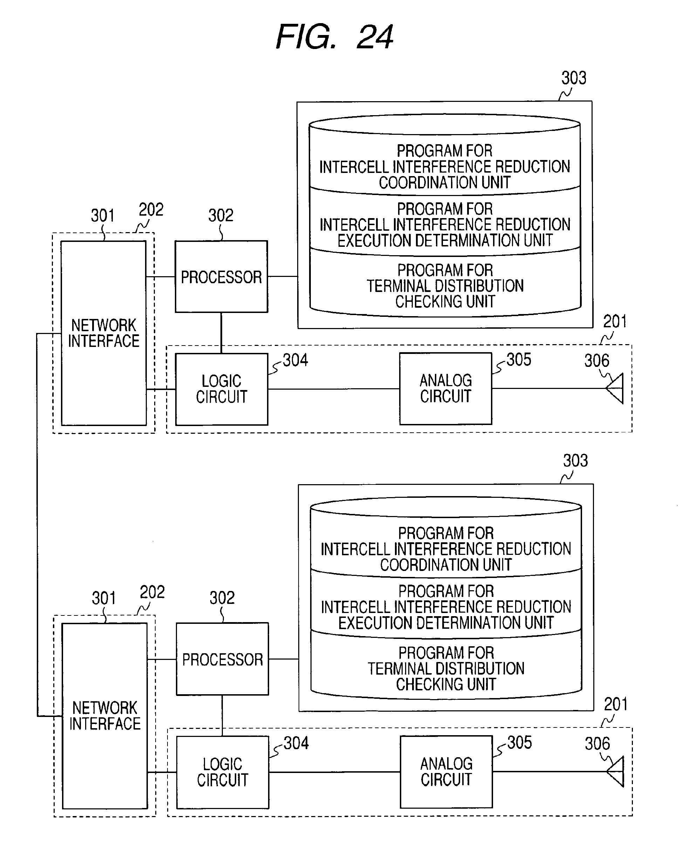

FIG. 24 shows the configuration of the base station 101 in FIG. 7.

Two base stations 101 have the same configuration. Each base station 101 is composed of a network interface device 301 which complies with the IEEE802.3 communication standard and which corresponds to the backhaul communications unit 202, a logic circuit 304 corresponding to the radio communications unit 201, an analog circuit 305, an antenna 306, a processor 302 to execute the terminal distribution checking unit 107, the intercell interference reduction execution unit 108, and the intercell interference reduction coordination unit 109, and a memory 303 which stores these executive programs.

The logic circuit 304 performs baseband signal processing based on, for example, the LTE (long term evolution) communication standard. The analog circuit 305 makes conversion between baseband digital signals and radio frequency analog signal and thus includes a digital-analog converter, an analog-digital converter, an up-converter, down-converter, a power amplifier, a low-noise amplifier, and a duplexer

FIGs. 8A to 8D each show an example of the control signal outputted by the radio communication unit 201, or the control signal whose information is processed. FIG. 8A shows the example in which measurement results of a received SIR (Signal to Interference Ratio), and a received SNR (Signal to Noise Ratio) of each of downstream signals at the respective terminals are mounted on an upstream signal before being fed back to the base station. The terminals each feed back an ID for uniquely fixing the identity of the terminal, and the received SNR as well as the received SIR, measured by a reference signal (a pilot signal) of the downstream signal, to the base station. SIR can be estimated with relative ease by measuring a reference-signal power ratio between the base stations; however, SNR is difficult to be estimated because it is difficult to measure a noise power. Accordingly, use of RSSI (Received Signal Strength Indicator) instead of the received SNR is conceivable

FIG. 8B shows the example in which RSSI is adopted. In this case, an operation at the terminal is substantially the same as that in the case of the example shown in FIG. 8A except that RSSI in place of the received SNR is adopted. Because RSSI represents a total receive power including the receive power of an interference signal, RSSI has a feature that it nearly corresponds to SNR in an environment where SIR is high, and interference is less, but in an environment where SIR is low, and interference is strong, RSSI on a higher side is measured.

FIG. 8C shows the example in which a propagation loss value in place of SNR, and RSSI is adopted. The propagation loss value can be calculated from the difference between a transmission power (dBm) and RSSI (dBm). If information on the transmission power is notified by the base station, the propagation loss value can be estimated by the terminal on the basis of the difference from RSSI.

FIG. 8D shows the example in which a distance from a preferred base station transmitting a desired signal to a terminal, and a distance from an interference base station that is the nearest to a terminal among the base stations transmitting an interference signal to the terminal are used on the basis of position information on the base stations, and the terminal. More specifically, this example can be realized by a terminal measuring a terminal position with the use of GPS (Global Positioning System), HDP (Highly Detectable Pilot), and so forth, and feeding back the terminal position to a base station, whereupon the base station refers to a position information database of a neighborhood base station, thereby computing a distance between the terminal and the base station. The distance from the preferred base station to the terminal is related to SNR, and a relationship between two types of distances is related to SIR (the distance from the preferred base station is related to power of S, and the distance from the nearest interfering base station is related to power of I).

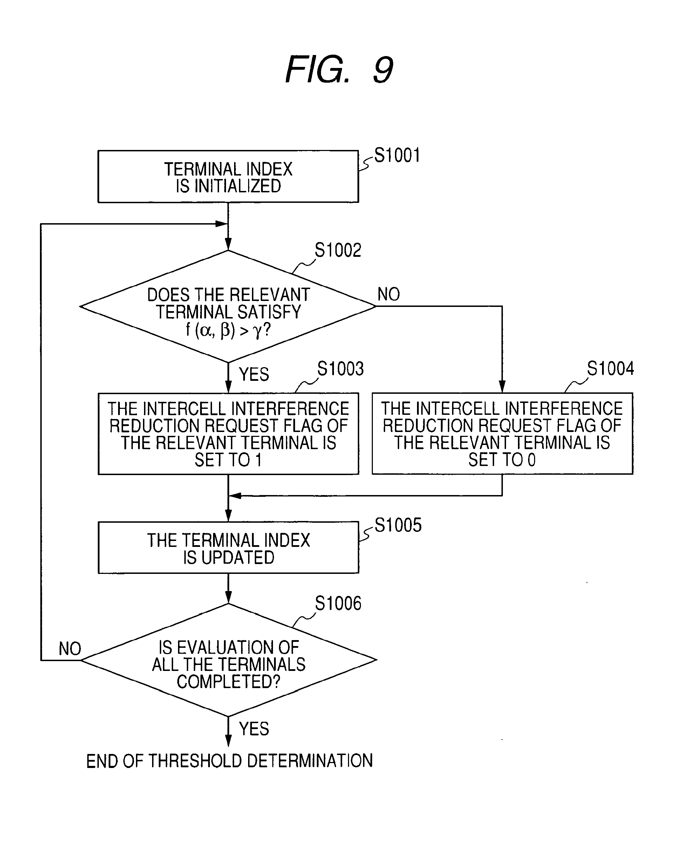

FIG. 9 shows an example of the operation of the terminal distribution checking unit 107 according to the embodiment. The terminal distribution checking unit 107 execute a threshold determination against information shown in FIGs. 8A to 8D, respectively, thereby making a determination on whether or not the intercell interference reduction is to be executed on a terminal-by-terminal basis, and recording results of the determination. In FIGs. 8A to 8D, respectively, physical quantities (in FIG. 8A, terminal received sir) listed in the left-side column are designated α and physical quantities (in FIG. 8A, terminal received SNR) listed in the right-side column are designated β. In general, if a function with variables α, β is expressed as f (α, β), and a value of the function f (α, β) is less than the threshold γ {it may be more than the threshold γ depending on the definition of the function f (α, β), it is determined that the terminal is a terminal requiring reduction in the intercell interference (an intercell interference reduction request flag is set to 1), and in a contrary case, it is determined that the terminal is a terminal not requiring reduction in the intercell interference (the intercell interference reduction request flag is set to 0) (steps S1002 to S1004). Processing is repeated (S1001 to S1005, S1006) to give such determinations as above to all the terminals.

FIGs. 10A to 10D each show an example of determination results of the intercell interference reduction request flag.

## Expression (1)
$$f(\alpha, \beta) = \alpha - 0.5\beta < \gamma$$

FIG. 10A shows the determination results in the case where a rule according to the expression (1) is applied to a table of FIG. 8A, and the threshold γ is 4. With the terminal with the terminal ID "1", α is 15 while β is 20, and therefore, f (α, β) is found 5 by computation according to the expression (1), exceeding the threshold γ, so that the terminal is determined as the terminal not requiring reduction in the intercell interference, whereupon the intercell interference reduction request flag is set to 0. With the terminal with the terminal ID "2", α is 0 while β is 3, and therefore, f (α, β) is found - 1. 5 by computation according to the expression (1), falling short of the threshold γ, so that the terminal is determined as the terminal requiring reduction in the intercell interference, whereupon the intercell interference reduction request flag is set to 1. The same can be of the terminal with the terminal ID "3".

FIG. 10B shows the determination results in the case where a rule according to expression (2) is applied to a table of FIG. 8B, and the threshold γ is 4.

## Expression (2)
$$f(\alpha, \beta) = \alpha - 0.5(100 + \beta) < \gamma$$

With the terminal with the terminal ID "1", α is 15 while β is- 80, and therefore, f (α, β ) is found 5 by computation according to the expression (2), exceeding the threshold γ, so that the terminal is determined as the terminal not requiring reduction in the intercell interference, thereby setting the intercell interference reduction request flag to 0. With the terminal with the terminal ID "2", α is 0 while β is - 97, and therefore, f (α, β) is found - 1. 5 by computation according to the expression (2), falling short of the threshold $\gamma$, so that the terminal is determined as the terminal requiring reduction in the intercell interference, thereby setting the intercell interference reduction request flag to 1. This is the same also for the terminal with the terminal ID "3".

FIG. 10C shows the determination results in the case where a rule according to expression (3) is applied to a table of FIG. 8C, and the threshold $\gamma$ is 4.

## Expression (3)

$$f(\alpha, \beta) = \alpha - 0.5(130 - \beta) < \gamma$$

With the terminal with the terminal ID "1", $\alpha$ is 15 while $\beta$ is 110, and therefore, f ($\alpha, \beta$) is found 5 by computation according to the expression (3), exceeding the threshold $\gamma$, so that the terminal is determined as the terminal not requiring reduction in the intercell interference, thereby setting the intercell interference reduction request flag to 0. With the terminal with the terminal ID "2", $\alpha$ is 0 while $\beta$ is 127, and therefore, f ($\alpha, \beta$) is found - 1. 5 by computation according to the expression (3), falling short of the threshold $\gamma$, so that the terminal is determined as the terminal requiring reduction in the intercell interference, thereby setting the intercell interference reduction request flag to 1. This is the same also for the terminal with the terminal ID "3".

FIG. 10D shows the determination results in the case where a rule according to expression (4) is applied to a table of FIG. 8D, and the threshold $\gamma$ is 2000.

## Expression (4)

$$f(\alpha, \beta) = -\alpha - 2(\alpha - \beta) < \gamma$$

With the terminal with the terminal ID "1", $\alpha$ is 200 while $\beta$ is 1800, and therefore, f ($\alpha, \beta$) is found 3000 by computation according to the expression (4), exceeding the threshold $\gamma$, so that the terminal is determined as the terminal not requiring reduction in the intercell interference, thereby setting the intercell interference reduction request flag to 0. Similarly, with the terminal with the terminal ID "2", $\alpha$ is 900 while $\beta$ is 1000, and therefore, f ($\alpha, \beta$) is found - 700 by computation according to the expression (4), falling short of the threshold $\gamma$, so that the terminal is determined as the terminal requiring reduction in the intercell interference, thereby setting the intercell interference reduction request flag to 1. With the terminal with the terminal ID "3", $\alpha$ is 900 while $\beta$ is 1300, and therefore, f ($\alpha, \beta$) is found - 100 by computation according to the expression (4), falling short of the threshold $\gamma$, so that the terminal is determined as the terminal requiring reduction in the intercell interference, thereby setting the intercell interference reduction request flag to 1.

In the case of the function f ($\alpha, \beta$) described as above, physical quantities $\alpha$, $\beta$, and $\gamma$ need be based on an identical unit, however, there is no particular limitation to a function form (a linear function, quadratic function, and so forth) and a unit (dB, m, and so forth). Further, f ($\alpha, \beta$) may be a function in which either $\alpha$, or $\beta$ is multiplied by 0, that is, a function of one variable, in effect. If the coefficient of, for example, $\beta$ is 0 in the expression (1), this will represent the case of the threshold determination against the terminal received SIR as $\alpha$, which is, however, within the scope of the present invention.

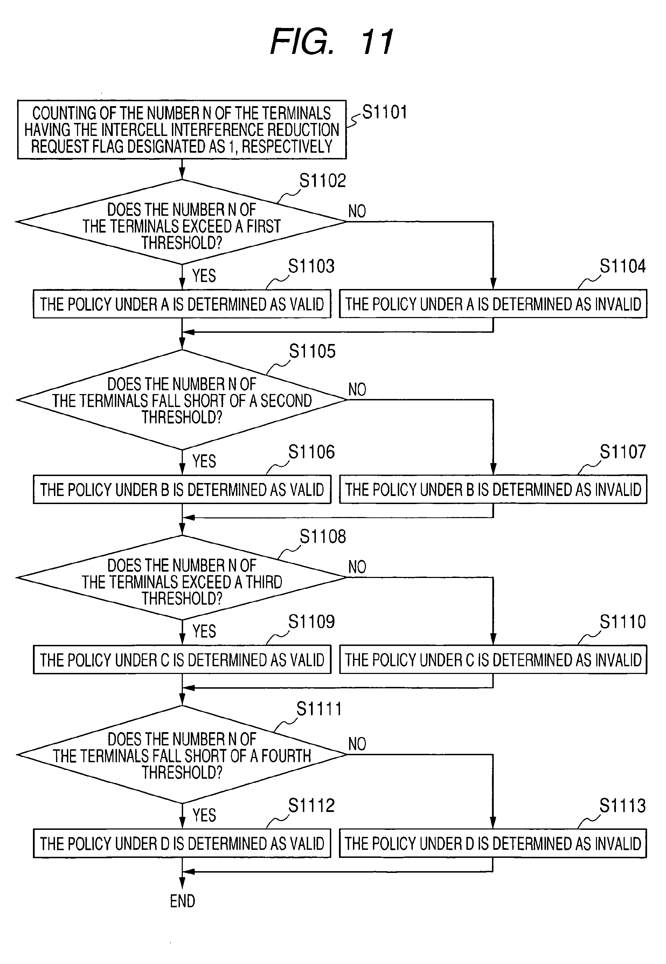

FIG. 11 shows an operation example of the intercell interference reduction execution determination unit 108. In this case, the sum of respective values (0 or 1) of the intercell interference reduction request flags generated by the terminal distribution checking unit 107 is found by addition of flag values of all the terminals in communication with the base station 101 itself (step S1101), and a threshold determination against the sum is executed, thereby determining whether the following four base station coordination policies are valid or invalid, respectively:

A) the relevant base station positively works on other base stations to execute intercell interference reduction (active execution);
B) the relevant base station positively works on other base stations to stop intercell interference reduction (active stoppage);
C) the relevant base station executes intercell interference reduction when other base stations work on the relevant base station (passive execution); and
D) the relevant base station stops intercell interference reduction when other base stations work on the relevant base station (passive stoppage).

More specifically, the intercell interference reduction execution determination unit 108 counts the number of the terminals, each having the intercell interference reduction request flag designated as 1, among the terminals in communication with the base station 101 itself, in the step S1101, and compares the number of the terminals as counted (or the proportion of the terminals as counted to the number of all the terminals) with a first threshold in steps S1102 to S1104, respectively, determining that the policy under A) as above is valid if the number of the terminals counted exceeds the first threshold, and the policy under A) as above is invalid if the number of the terminals counted does not exceed the first threshold. Thereafter, the intercell interference reduction execution determination unit 108 similarly compares the number of the terminals as counted (or the proportion of the terminals counted to the number of all the terminals) with a second threshold in steps S1105 to S1107, respectively, determining that the policy under B) as above is valid if the number of the terminals counted falls short of the second threshold, and the policy under B) as above is invalid f the number of the terminals counted exceeds the second threshold. Further, the intercell interference reduction execution determination unit 108 similarly compares the number of the terminals counted (or the proportion of the terminals counted to the number of all the terminals) with a third threshold in steps S1108 to S1110, respectively, determining that the policy under C) as above is valid if the number of the terminals counted exceeds the third threshold, and the policy under B) as above is invalid if the number of the terminals counted does not exceed the third threshold. The intercell interference reduction execution determination unit 108 similarly compares the number of the terminals counted (or the proportion of the terminals counted to the number of all the terminals) with a fourth threshold in steps S1111 to S1113, respectively, determining that the policy under D) as above is valid if the number of the terminals counted falls short of the fourth threshold, and the policy under D) as above is invalid if the number of the terminals counted exceeds the fourth threshold.

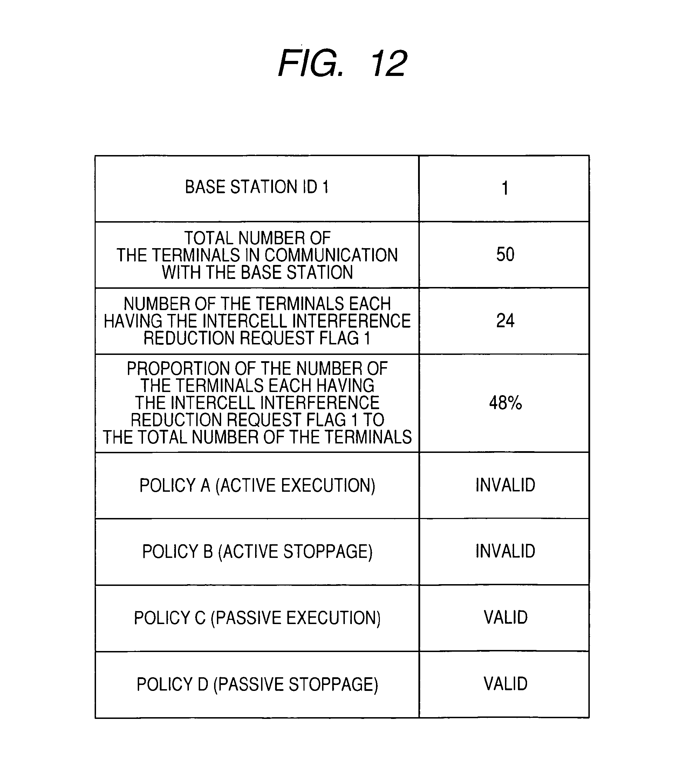

FIG. 12 shows an output of the intercell interference reduction execution determination unit 108 by way of example. Herein, it is assumed that with the base station with base station ID at 1 (the total number of the terminals thereof: 50, the number of the terminals each having the intercell interference reduction request flag 1: 20), the first threshold corresponds to 30 units of the terminals (the proportion of the terminals each having the intercell interference reduction request flag 1: 60%), the second threshold corresponds to 10 units of the terminals (the proportion of the terminals each having the intercell interference reduction request flag 1: 20%), and the third and fourth thresholds each correspond to 20 units of the terminals (the proportion of the terminals each having the intercell interference reduction request flag 1: 40%).

Because the actual number of the terminals counted is 24 units (the terminals each having the intercell interference reduction request flag 1: 48 % of the total number of the terminals), falling short of the first threshold corresponding to 30 units of the terminals (the terminals each having the intercell interference reduction request flag 1 (60 % of the total number of the terminals), it is determined that the policy A is invalid in the steps S1102 to S1104, respectively. Because the actual number of the terminals counted is 24 units (the terminals each having the intercell interference reduction request flag 1: 48% of the total number of the terminals), exceeding the second threshold corresponding to 10 units of the terminals (the terminals each having the intercell interference reduction request flag 1: 20 % of the total number of the terminals), it is determined that the policy B is invalid in the steps S1105 to S1107, respectively. Because the actual number of the terminals counted is 24 units (the terminals each having the intercell interference reduction request flag 1: 48% of the total number of the terminals), exceeding the third threshold corresponding to correspond to 20 units of the terminals (of the terminals each having the intercell interference reduction request flag 1: 40% of the total number of the terminals), it is determined that the policy C is valid in the steps S1108 to S1110, respectively. Further, because the actual number of the terminals counted is 24 units (the terminals each having the intercell interference reduction request flag 1: 48% of the total number of the terminals), exceeding the fourth threshold corresponding to 20 units of the terminals (the terminals each having the intercell interference reduction request flag 1: 40% of the total number of the terminals), it is determined that the policy D is invalid in the steps S1111 to S1113, respectively. As a result, the relevant base station (with the base station ID 1) passively executes the intercell interference reduction when other base stations work on the relevant station.

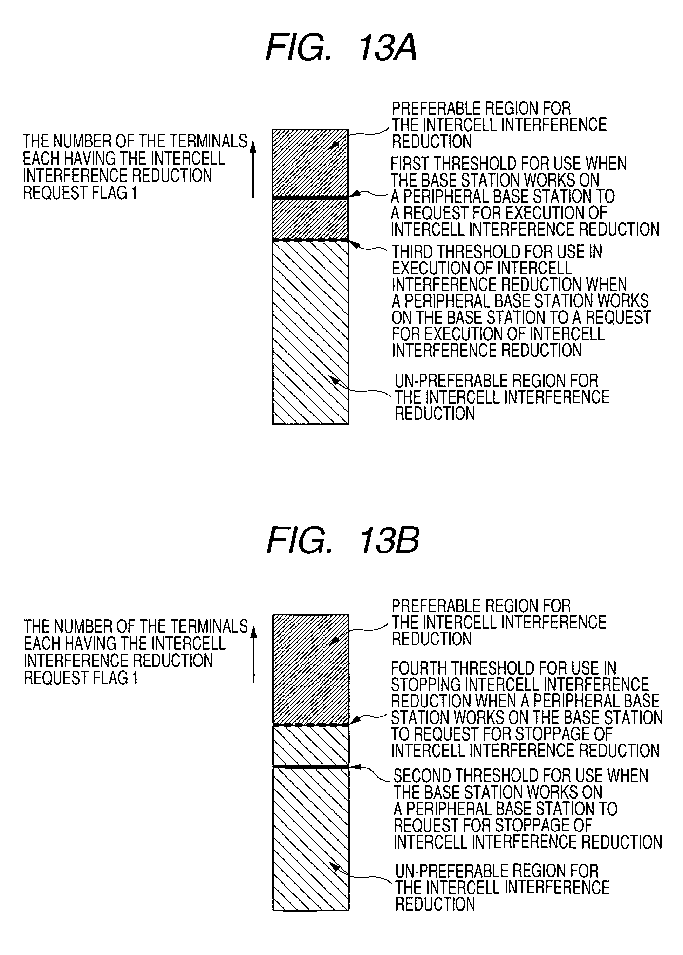

FIGs. 13A, 13B each show a concept underlying a method for setting a threshold. FIGs. 13A shows the concept on the polices A, C, that is, the concept underlying a method for newly executing the intercell interference reduction. FIGs. 13B shows the concept on the polices B, D, that is, the concept underlying a method for stopping the intercell interference reduction. In the figure, the longitudinal direction indicates the number, or the proportion of the terminals each having the intercell interference reduction request flag 1. There exist a region along the longitudinal direction, in which the intercell interference reduction is preferable in terms of system frequency utilization efficiency, and a region along the longitudinal direction, in which the intercell interference reduction is un-preferable.

As a preferable embodiment of the invention, it can be the that the intercell interference reduction is the intercell interference reduction is preferably executed the instant at which the number of the terminals each having the request flag 1 exceeds a boundary region between the preferable region and the un-preferable, and the intercell interference reduction is preferably stopped the instant at which the number of the terminals each having the request flag 1 falls short of the boundary region, however, since the number of the terminals each having the request flag 1 undergoes variation over time, if the threshold is set very close to the edge of the boundary region, the base station frequently works on other base stations, thereby raising the risk of control being un-stabilized. Accordingly, if the first threshold, and the second threshold, for use in causing a chance for the base station to work on other base stations in order to execute or stop the intercell interference reduction, respectively, is kept away from the boundary region, this will enable the control to have a hysteresis, so that more stable control will be realized. The third and fourth thresholds for use in order that the base station passively executes or stops the intercell interference reduction upon receiving a chance from other base stations working on the base station, respectively, may be set closer to the boundary region than the first and second thresholds are.

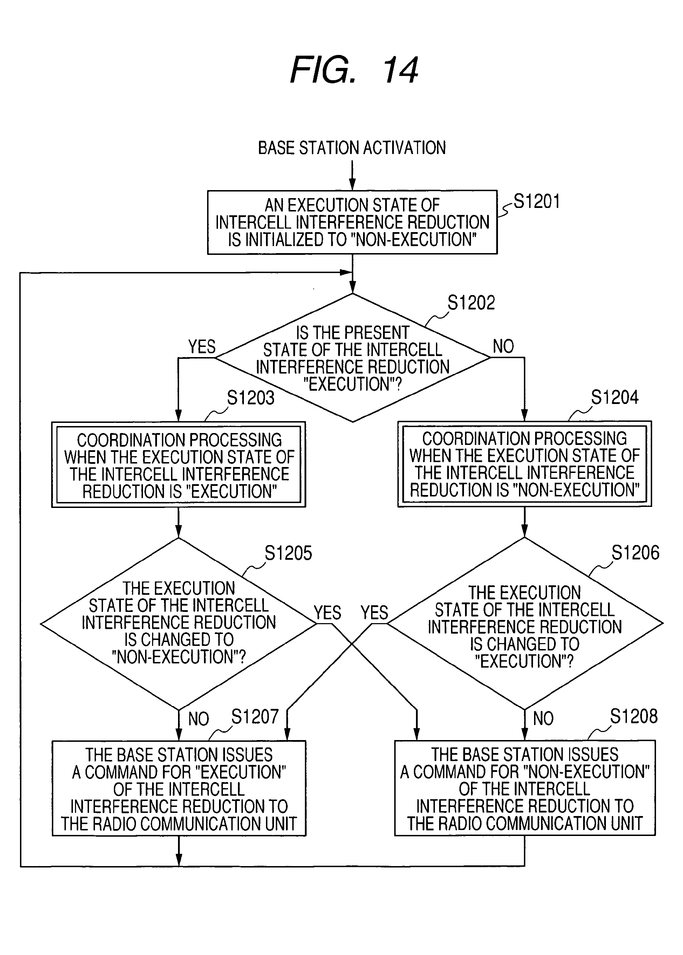

FIG. 14 shows an operation example of the intercell interference reduction coordination unit 109. First, in step S1201, an execution state of the intercell interference reduction of the relevant base station is initialized to non-execution, and the radio communication unit 201 as well is activated in a non-execution state of the intercell interference reduction. In step S1202, processing is caused to branch according to the present state of the intercell interference reduction. That is, in this step, the processing is branched between a processing when the execution state of the intercell interference reduction is "execution" (step S1203), and a processing when the execution state of the intercell interference reduction is "non-execution" (step S1204). The processing in each of the steps S1203, S1204 will be described in detail later on, and an output thereof represents the latest execution state of the intercell interference reduction. In other words, in the steps S1203, S1204, state transition occurs in respect of the execution state of the intercell interference reduction. In each of steps S1205, S1206, a determination is made on whether or not the state transition has occurred. In steps S1207, S1208, respectively, the base station issues a command to the radio communication unit 201 such that a radio signal is transmitted according to the latest execution state of the intercell interference reduction after the state transition.

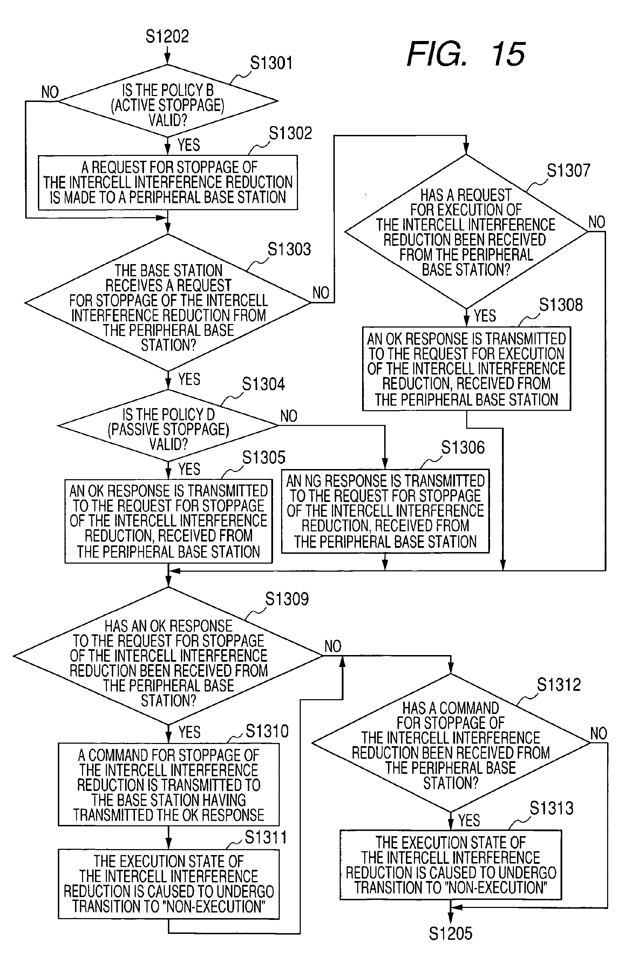

FIG. 15 is a flow chart showing coordinated processing (the step S1203) by the base station in the middle of execution of the intercell interference reduction. If the policy B (refer to FIG. 12) of the relevant base station is valid, that is, the active stoppage is valid, the base station makes a request for stoppage of the intercell interference reduction to a peripheral base station (steps S1301, S1302) on the basis of a neighbor list held by the relevant base station. On the other hand, when the base station receives a request for stoppage of the intercell interference reduction from the peripheral base station, if the policy D (refer to FIG. 12) is valid, that is, the passive stoppage is valid, the base station transmits an OK response to the request for stoppage, transmitting an NG response if the passive stoppage is invalid (steps S1303 to S1306). Further, when the base station receives a request for execution of the intercell interference reduction from the peripheral base station, the relevant the base station unconditionally transmits an OK response since the relevant the base station is in the middle of execution of the intercell interference reduction (steps S1307, S1308). When the base station has made the request for stoppage of the intercell interference reduction to the peripheral base station (the step S1302), the base station receives an OK response or an NG response. If the OK response is received at this point in time, the base station formally issues a command for stoppage of the intercell interference reduction to the peripheral base station having transmitted the OK response, thereby causing the execution state of the intercell interference reduction of the relevant base station to undergo transition to "non-execution" (steps S1309 to S1311). If the peripheral base station issues a command for stoppage of the intercell interference reduction to the relevant base station in the step S1310, the relevant base station is to receive the command. Upon receiving the command, the relevant base station causes the execution state of the intercell interference reduction of the relevant base station to undergo transition to "non-execution" (steps 1312, S1313).

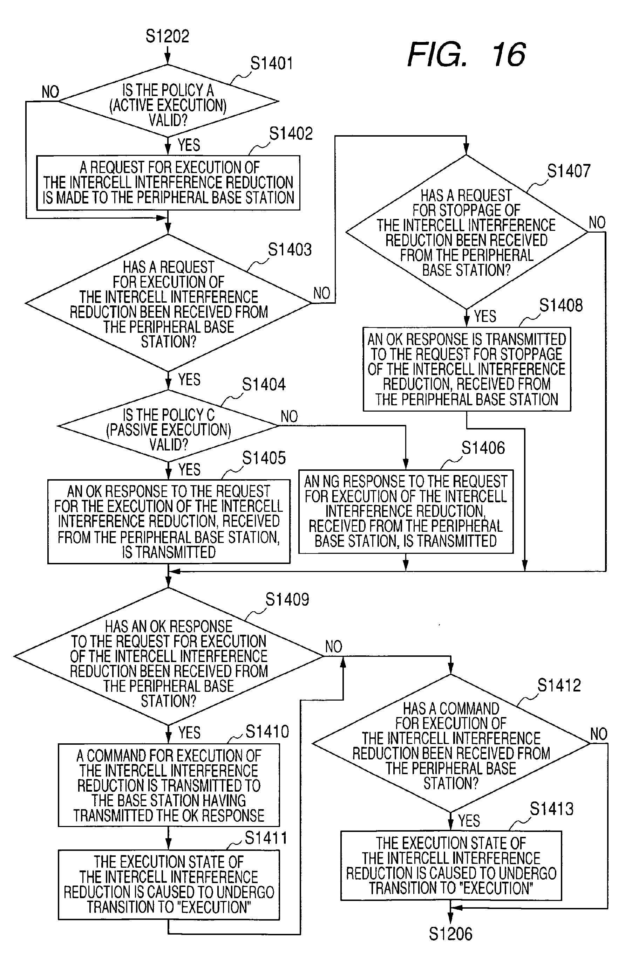

FIG. 16 is a flow chart showing coordinated processing (the step S1204) by the base station having stopped execution of the intercell interference reduction. In the figure, the basic operation is the same as that in FIG. 15. If the policy A (refer to FIG. 12) of the relevant base station is valid, that is, the active execution is valid, the base station makes a request for execution of the intercell interference reduction to a peripheral base station (steps S1401, S1402) on the basis of the neighbor list (described later) held by the relevant base station. On the other hand, when the base station receives a request for execution of the intercell interference reduction from the peripheral base station, if the policy C (refer to FIG. 12) is valid, that is, the passive execution is valid, the base station transmits an OK response to the request for the execution, transmitting an NG response if the passive execution is invalid (steps S1403 to 1406). Further, when the base station receives a request for stoppage of the intercell interference reduction from the peripheral base station, the relevant the base station unconditionally transmits an OK response since the relevant the base station is in the middle of stoppage of the intercell interference reduction (steps S1407, S1408). When the base station has made the request for execution of the intercell interference reduction to the peripheral base station (the step S1402), the base station receives an OK response or an NG response from the peripheral base station. If the OK response is received at this point in time, the base station formally issues a command for execution of the intercell interference reduction to the peripheral base station having transmitted the OK response, thereby causing the execution state of the intercell interference reduction of the relevant base station to undergo transition to "execution" (steps S1409 to S1411). If the peripheral base station issues a command for execution of the intercell interference reduction to the relevant base station in the step S1410, the relevant base station is to receive the command. Upon receiving the command, the relevant base station causes the execution state of the intercell interference reduction of the relevant base station to undergo transition to "execution" (steps s1412, S1413).

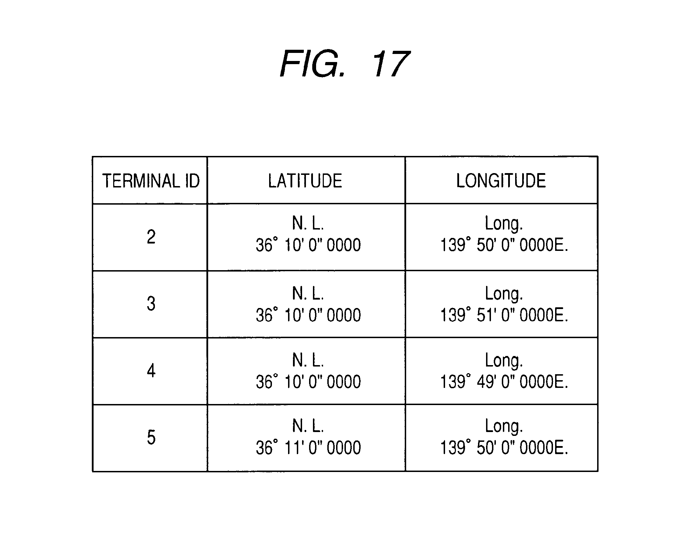

FIG. 17 is a view showing an example of the neighbor list to which reference is made by the base station according to the embodiment of the present invention. FIG. 17 shows the case where the base stations with IDs 2 to 5, respectively, exist in the neighborhood of the base station with ID 1. Information to which reference is made by the intercell interference reduction coordination unit 109 is concerned with the ID of a peripheral base station only, however, in order to compute a distance between the terminal - the base station, as shown in FIG. 10D, the intercell interference reduction coordination unit 109 may hold the position information on the base stations, in the form of a list.

The neighbor list is not to be often updated, but to be updated at the time when the relevant base station is installed, and a peripheral base is additionally installed.

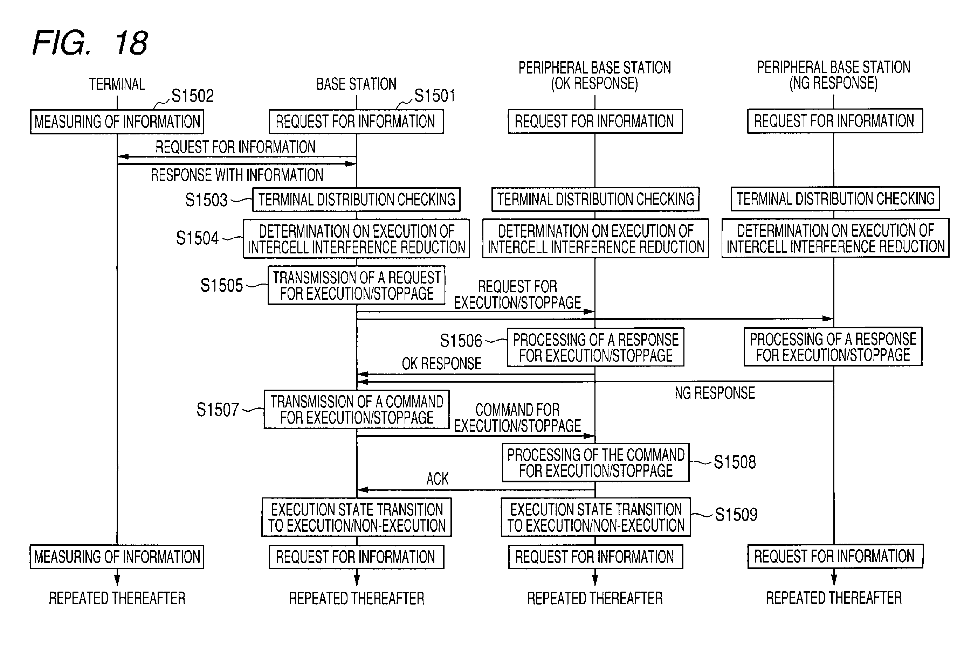

FIG. 18 is a sequence chart for processing and control information, according to the present invention. The base stations each make a request for feeding back information (the received SIR, received RSSI, the propagation loss value, the received SNR, and so forth) for generation of tables shown in FIGs. 8A to 8D, respectively, to the base station, to all the terminals belonging to the base station itself (step S1501). In response to the request for information, the terminals each feed back information based on results of measurement taken in step S1502 to the base station by use of an upstream control channel. The base stations each receive the information fed back from all the terminals belonging to the base station itself via the radio communication unit 201, and subsequently, determine whether or not the intercell interference reduction is to be executed on the terminal-by-terminal basis (step S1503) in accordance with a procedure shown in FIG. 9 in the operation of the terminal distribution checking unit 107 shown in FIG. 7, thereby preparing tables shown in FIGs. 10A to 10D, respectively. In the operation of the intercell interference reduction execution determination unit 108, and on the basis of the tables shown in FIGs. 10A to 10D, respectively, the base station determines whether the following four policies each are valid or invalid (step S1504) in accordance with a procedure shown in FIG. 11, thereby preparing a table shown in FIG. 12:

A) the relevant base station positively works on other base stations to execute intercell interference reduction (active execution);
B) the relevant base station positively works on other base stations to stop intercell interference reduction (active stoppage);
C) the relevant base station executes intercell interference reduction when other base stations work on the relevant base station (passive execution); and
D) the relevant base station stops intercell interference reduction when other base stations work on the relevant base station (passive stoppage).

Thereafter, in the operation of the intercell interference reduction coordination unit 109, the base station finally makes a determination on whether or not the intercell interference reduction is to be executed by the respective base stations in accordance with procedures shown in FIGs. 14 to 16, respectively, (steps S1505 to S1508). In accordance with the result of the determination, the intercell interference reduction coordination unit 109 issues a command for execution, or stoppage of the intercell interference reduction to the radio communication unit 201, and the radio communication unit 201 adjusts a transmission output of a signal, as shown in FIG. 2A, or 2B, in accordance with the command (step S1509). Further, in the case of communication between the base stations, communication between the base stations is executed through a backhaul network via the backhaul communication unit 202.

Herein, the operation of the intercell interference reduction coordination unit 109 is described with reference to the sequence chart of FIG. 18.

If the policy A (active execution) is found valid after the intercell interference reduction execution determination unit 108 has made the determination for execution of the intercell interference reduction, having prepared the table shown in FIG. 12, the base station transmits a request for execution of the intercell interference reduction to peripheral base stations on the basis of the neighbor list of FIG. 17. Similarly, if the policy B (active stoppage) is valid, the base station transmits a request for stoppage of the intercell interference reduction to the peripheral base stations (the step S1505).

The peripheral base station having received either of the requests transmits a response to the request, based on its own table in FIG.12, to the base station at a transmission source of the request (the step S1506). If the policy C (passive execution) of the peripheral base station having received the request is valid, and the request for execution of the intercell interference reduction is received, the peripheral base station transmits an OK response to the transmission source of the request. Similarly, if the policy C (passive execution) of the peripheral base station having received the request is invalid, and the request for execution of the intercell interference reduction is received, the peripheral base station transmits an NG response to the transmission source of the request.

Similarly, if the policy D (passive stoppage) of the peripheral base station having received the request is valid, and the request for stoppage of the intercell interference reduction is received, the peripheral base station transmits an OK response to the transmission source of the request. Similarly, if the policy D (passive stoppage) of the peripheral base station having received the request is invalid, and the request for stoppage of the intercell interference reduction is received, the peripheral base station transmits an NG response to the transmission source of the request.

Further, if the execution state of the peripheral base station having received the request is "execution", and the request for stoppage of the intercell interference reduction is received, the peripheral base station transmits an OK response to the transmission source of the request. Similarly, if the execution state of the peripheral base station having received the request is "non-execution", and the request for stoppage of the intercell interference reduction is received, the peripheral base station transmits an OK response to the transmission source of the request.

Processing described as above corresponds to the processing in the steps S1303 to S1308, and the steps S1403 to S1408.

When a base station at a request source has received an OK response from at least one of the peripheral base stations, the base station transmits a command for execution of intercell interference reduction, or stoppage of the intercell interference reduction to a peripheral base station at a transmission source of the OK response (the step S1507) in order to actually execute, or stop the intercell interference reduction. The peripheral base station having received the command causes an execution state of the intercell interference reduction of the peripheral base station itself to undergo transition to execution, or non-execution, thereby transmitting ACK to the base station at a transmission source of the command (the step S1508). The peripheral base station causes an execution state of the intercell interference reduction of the base station having received ACK at the transmission source of the command to undergo transition to execution, or non-execution (the step S1509).

The base station that has caused the execution state of the intercell interference reduction of the base station itself to undergo transition to execution, or non-execution alters a signal transmission method using the radio communication unit 201 to that shown in, for example, FIG. 2B in the case of the transition to execution, or to that shown in, for example, FIG. 2A in the case of the transition to non-execution.

Further, if the base station at the request source has not received an OK response at all, or has received an NG response only, the base station does not transmits any command to the peripheral base station.

The processing described in the foregoing is an operation in one cycle, and the base stations each work on various parties by starting with a request for information, made to the terminals, thereby repeating the operation thereafter.

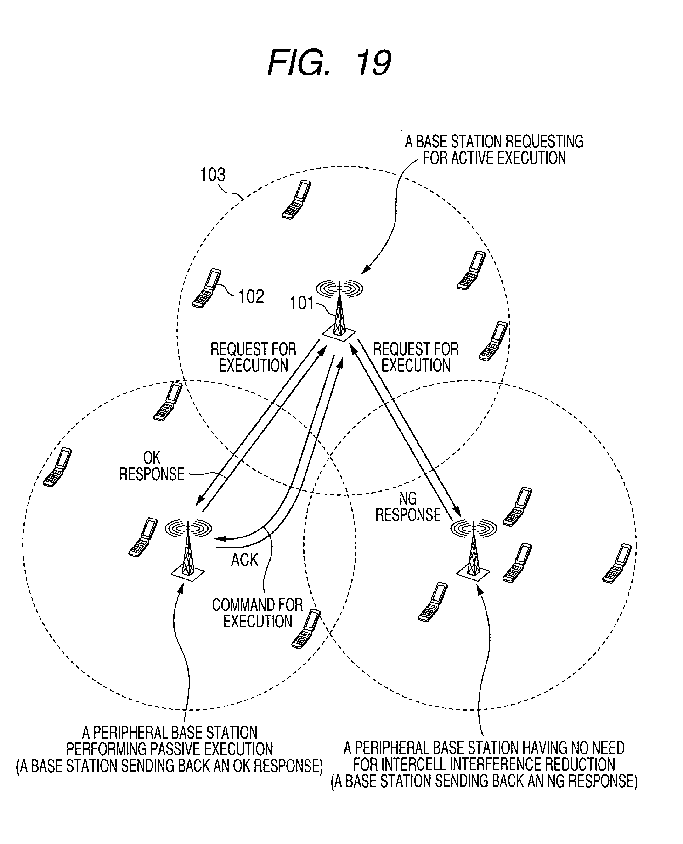

FIG. 19 is a view showing flows of message exchange in the sequence chart shown in FIG. 18. Three base stations each represent "a base station requesting for active execution of intercell interference reduction", with terminals distributed only on a cell boundary, "a peripheral base station performing passive execution", with most of terminals distributed on a cell boundary, and "a peripheral base station having no need for intercell interference reduction", with most of terminals distributed inside a cell. The base station requesting for active execution of intercell interference reduction is to make a request for active execution of intercell interference reduction to two peripheral base stations as the processing in the step S1505 in FIG. 18. The respective peripheral base stations transmit an OK response, or an NG response to the base station at the request transmission source as the processing in the step S1506 in FIG. 18. In this case, the base station at the request transmission source has received the OK response from one of the peripheral base stations, so that the base station has transmitted a command for execution of the intercell interference reduction to "the peripheral base station performing passive execution", having transmitted the OK response, as the processing in the step S1507 in FIG. 18. "The peripheral base station performing passive execution", having received the command, decodes the command as the processing in the step S1508 in FIG. 18, thereby transmitting ACK to the base station at a command transmission source.

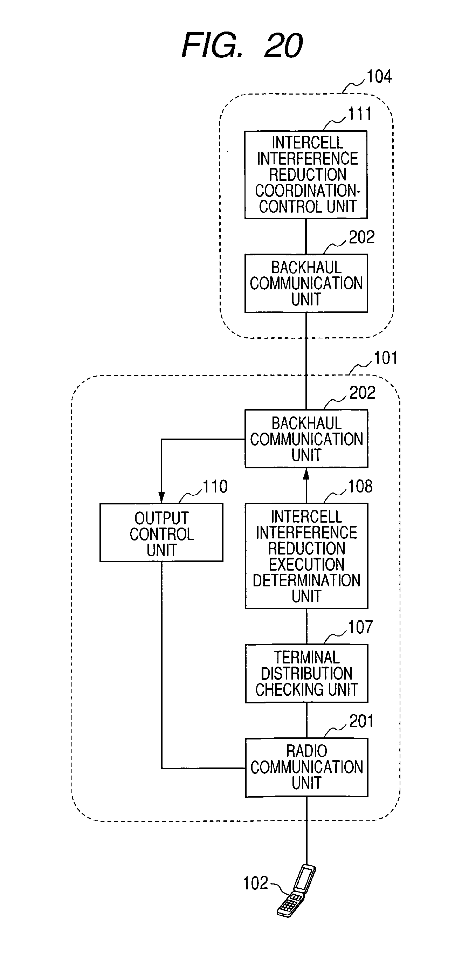

FIG. 20 shows a second embodiment of the invention. This embodiment represents the case where part of the function of the base station 101 shown in FIG. 7 is transferred to a gateway 104. With this method, communication between the base stations 101 as is the case with the first embodiment is no longer required, and the second embodiment has a feature in that there is an increase in communication between the gateway 101 and the base stations 101, and a throughput of the gateway 104 itself.

The gateway 101 communicates with one, or plural the base stations 101 by use of the backhaul communication unit 202. The respective base stations 101 transfer results of the output (refer to FIG. 12) of the intercell interference reduction execution determination unit 108 to the gateway 104, and the gateway 104 transmits an execution state (execution or non-execution) of intercell interference reduction of each of the base stations 101 to the respective base stations. The respective base stations 101 decode the execution state (execution or non-execution) of the intercell interference reduction, received from the gateway 104 via the backhaul communication unit 202, with the use of an output control unit 110, thereby issuing a command for output adjustment (such adjustment as shown in FIG. 2A in the case of the execution state of the intercell interference reduction being non-execution, or such adjustment as shown in FIG. 2B in the case of the execution state of the intercell interference reduction being execution) to the radio communication unit 2

The processing of the intercell interference reduction coordination unit 109 described with reference to FIGs. 14 to 16 is performed by an intercell interference reduction coordination-control unit 111 inside the gateway 104. The gateway 104 repeatedly performs the processing in each of the steps S1201 and so forth against all the base stations 101 under control of the gateway 104 itself. In other words, this unit that the processing in the step S1202 is applied to all the base stations after the processing in the step S1201 is applied to all the base stations. In place of such repeated processing as described above, a thread may be run on a base station-by-base station basis, thereby performing a multi-threaded processing.

Execution of flag management inside the gateway 104 can be substituted for the request for execution of the intercell interference reduction, the request for stoppage of the intercell interference reduction, the OK response, the NG response, the command for execution of the intercell interference reduction, the command for stoppage of the intercell interference reduction, and ACK, for use in actual communication between the base stations as described with reference to FIGs. 14 to 16.

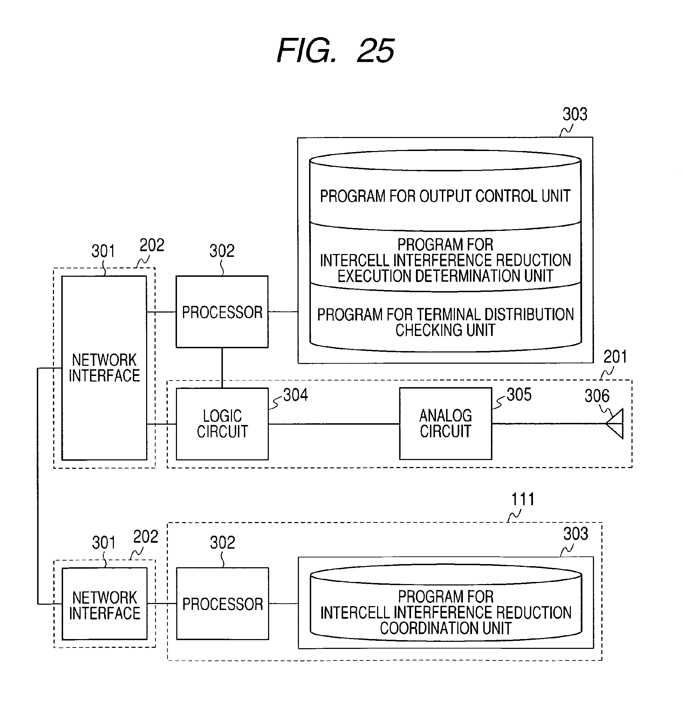

FIG. 25 shows the configuration in case of a base station 101 and a gateway 104 in FIG. 20.

The configuration in case of the base station 101 is almost the same as that in an exemplary embodiment of FIG. 24, however, programs in memory 303 are replaced. Programs to be stored in this embodiment are such executive programs as the terminal distribution checking unit 107, the intercell interference reduction execution determination unit 108, and the output control unit 111.

The gateway 104 is composed of a network interface device 301 which complies with the IEEE802.3 communication standard and which corresponds to the backhaul communications unit 202, a processor 302 which executes the intercell interference reduction coordination unit 111, a memory 303 which stores an executive program of the intercell interference reduction coordination unit 111.

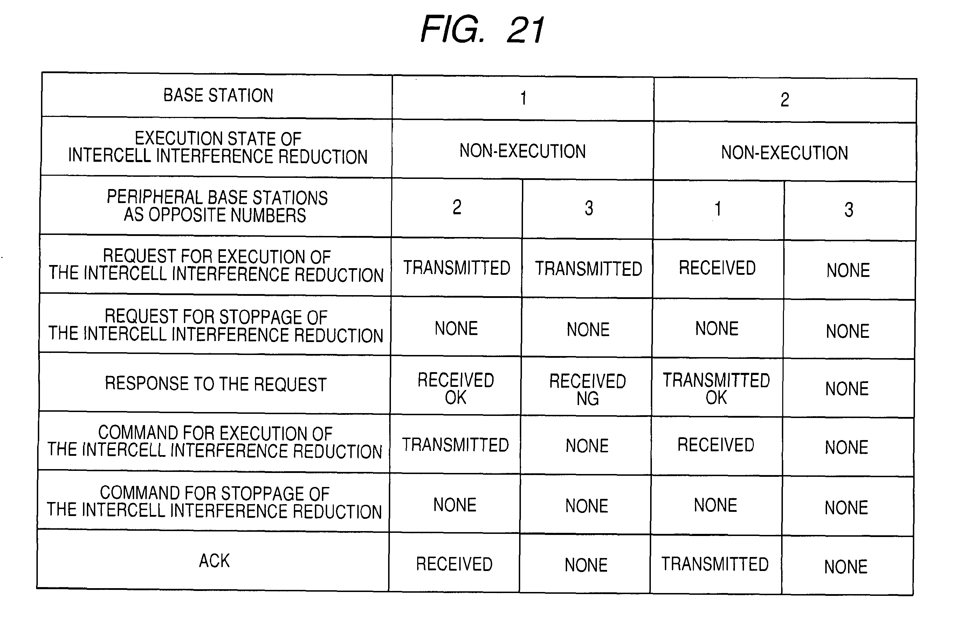

FIG. 21 is a view showing an example of the flag management inside the gateway.
The gateway 104 manages flags, the flags each indicating exchange of control information, such as the request for execution of the intercell interference reduction, and so forth, on a base station-by-base station basis. This example is concerned with a base station with ID 1, and a base station with ID 2, showing an example of the flag management when the execution state of the intercell interference reduction of each of the base stations is "non-execution"

The base stations each hold two base stations, that is, base stations with ID 2, and ID 3, respectively, and base stations with ID 1, and ID 3, respectively, as peripheral base stations to be managed according to the neighbor list. The base station with ID 1 transmits a request for execution of intercell interference reduction to the peripheral base stations (ID 2, ID 3). The base station with ID 2 receives the request for the execution of the intercell interference reduction from the base station with ID 1.

The base station with ID 2 transmits an OK response against the request to the base station with ID 1, and the base station with ID 1 receives the OK response. However, the base station with ID 1 receives an NG response from the base station with ID 3. The base station with ID 1, upon receiving this result, transmits a command for execution of the intercell interference reduction to the base station with ID 2, and the base station with ID 2 receives the command. Thereafter, the base station with ID 2 transmits ACK to the command to the base station with ID 1, and the base station with ID 1 receives ACK.

Thus, the flag management executed inside the gateway can be substituted for communication between the base stations. As a result of virtual communication effected through the flag management shown in FIG. 21, the base station with ID 1 at an issuance source of the command for the execution of the intercell interference reduction, together with the base station with ID 2 having received the command for the execution of the intercell interference reduction, causes the execution state of the intercell interference reduction to make a transition from non-execution to execution. Further, with respect to the base station with ID 3 that have neither transmitted, nor received the command for the execution of the intercell interference reduction, state transition does not occur.

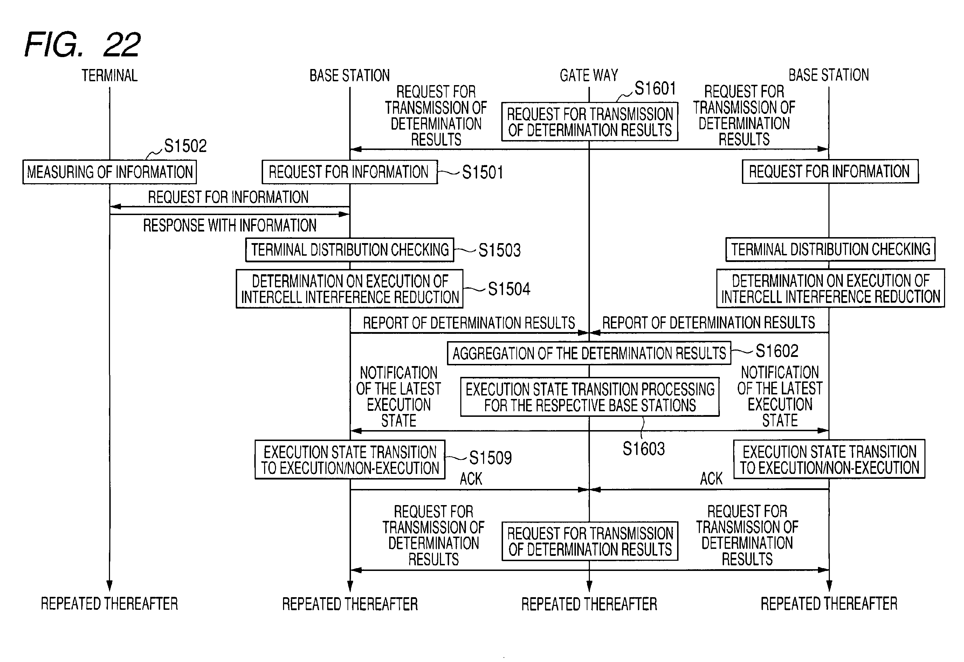

FIG. 22 is a sequence chart of the second embodiment of the invention. In the figure, a mechanism for effecting information aggregation to the gateway, and causing the gateway to notify the result of a state transition to the respective base stations is added to the sequence chart shown in FIG. 18.

First, the gateway makes a request to the respective base stations for transmission of intercell interference reduction execution determination results, as the output results of the intercell interference reduction execution determination unit 108, to the gateway (step S1601). This operation is performed by the intercell interference reduction coordination-control unit 111 via the backhaul communication unit 202. The respective base stations, upon receiving the request from the gateway, collect information from respective terminals in accordance with procedures shown in FIGs. 9, and 11, respectively, to generate the intercell interference reduction execution determination results shown in FIG. 12, thereby transmitting the determination results to the gateway (the steps S1501 to1504). The intercell interference reduction coordination-control unit 111 of the gateway aggregates the determination results with respect to all the base stations (step S1602), and perform such processing as described with reference to FIGs. 20, 21, thereby generating the latest execution state of the intercell interference reduction (execution, or non-execution) with respect to each of the base stations (step S1603). The gateway notifies the latest execution state as the latest state to the respective base stations, whereupon the respective base stations decode the latest state with the use of the output control unit 110, thereby issuing a command for an output method corresponding to the latest state to the radio communication unit 201 (the step S1509).

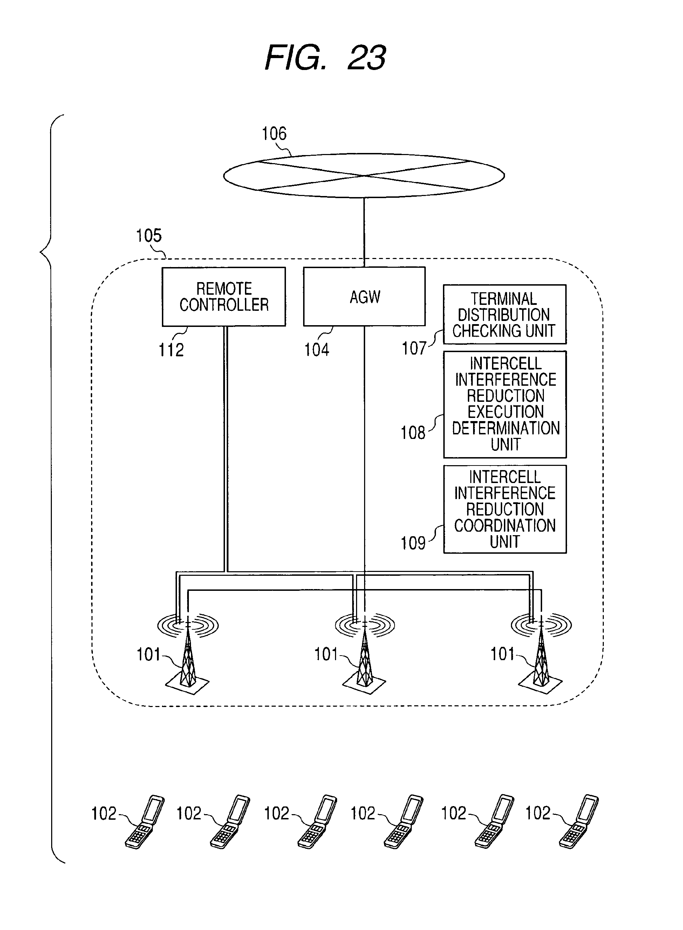

FIG. 23 shows a third embodiment of the invention. This embodiment differs from the first embodiment, and the second embodiment in that a remote controller 112 for performing maintenance of the base station 101 at remote locations is incorporated in the backhaul network 105. The present embodiment is identical to the second embodiment except that the function performed by the gateway 104 in the second embodiment is implemented by the remote controller 112. In other words, if the remote controller 112 is substituted for the gateway 104 shown in FIG. 20, and if the gateway shown in FIG. 22 is read as the remote controller, the present invention can be carried out by use of a method identical to that in the case of the second embodiment.

The present embodiment has a feature that a load imposed on the gateway 104 in the second embodiment is undertaken by the remote controller 112, so that to the load can be dispersed, thereby lessening the load imposed on the gateway 104.

With the radio communications system according to the present invention, it is possible to enhance the communication quality of the terminal at the cell boundary while preventing deterioration in frequency utilization efficiency of the system as a whole as much as possible. As a result, it is possible to realize the trade-off between high frequency utilization efficiency of the system as a whole, and control of dispersion in service quality of the terminal, dependent on a distance from the base station.

**Claims**

1. A radio communications system comprising a plurality of base stations,
   wherein each base station has the transmission method which reduce intercell interference and the transmission method which does not reduce intercell interference;
   wherein each base station determines whether reduction in intercell interference is required for respective terminals belonging own base station;
   wherein the corresponding base station determines whether to implement the transmission method which reduce the intercell interference and the transmission method which does not reduce the intercell interference according to the number of terminals for which the intercell interference must be applied or the proportion of the number of all terminals belonging to the base station; and
   wherein, based on the determination results of a plurality of base stations, the plural base stations simultaneously implement the transmission method which reduce the intercell interference or the plural base stations simultaneously implement the transmission method which does not reduce the intercell interference.

2. The system of claim 1,
   wherein, based on the determination results, each base station requests the implementation of the transmission method which reduce the intercell interference or the implementation of the transmission method which does not reduce the intercell interference to peripheral base stations which is on the periphery of the corresponding base station;
   wherein, when the peripheral base station receives the request, the base stations determines whether to accept the request based on the own determination results and sends the response that the request is accept or the request is not accepted to the base station which is a sender of the request; and
   wherein, when the base station which is the sender of the request receives the response that the request is accepted from the peripheral base station, the sender base station implements the transmission method which reduce the intercell interference or the transmission method which does not reduce the intercell interference according to the contents of the request, while the peripheral base station that has sent the response that the request is accepted implements the transmission method which reduce the intercell interference or the transmission method which does not reduce the intercell interference according to the contents of the request,
   whereby plural base stations simultaneously implement the transmission method which reduce the intercell interference or plural base stations simultaneously implement the transmission method which does not reduce the intercell interference.

3. The system of claim 1, comprising at least one of a gateway which performs protocol conversion between a core network and a radio network composed of plural base stations and a remote controller which remotely manage and control plural base stations,
   wherein each base station reports the determination results to the gateway or the remote controller, while the gateway or the remote controller collects the reported results about plural base stations the gateway or the remote controller manages;
   wherein, base on the reported results collected from plural base stations, the gateway or the remote controller selects whether each base station uses the transmission method which reduces the intercell interference or the transmission method which does not reduce the intercell interference;
   wherein the gateway or the remote controller notifies each base station of the selection results about each base station; and
   wherein, based on the notification results, each base station implements the transmission method which reduce the intercell interference or the transmission method which does not reduce the intercell interference,
   whereby plural base stations simultaneously implement the transmission method which reduce the intercell interference or plural base stations simultaneously implement the transmission method which does not reduce the intercell interference.

4. The system of claims 1 to 3,
   wherein each base station collects one or plural items of information of each terminal to which each base station belongs from among reception SNR at a terminal, reception SIR at a terminal, reception RSSI at a terminal, propagation loss between base station and terminal and terminal position information;
   wherein each base station calculates a function value using the physical value obtained from the one or plural items of information as a variable, and determines whether there is a need to implement reduction in intercell interference for each terminal according to threshold decision for the function value.

5. The system of claims 1 to 3,
   wherein, based on the criteria of the number of terminals which require reduction in intercell interference, or the proportion of the number of the terminals to the number of all the terminals belonging to the each station, each base station makes:

a decision of whether to make an active request of transmitting the request of implementing the transmission method which reducing the intercell interference or implementing the transmission method which does not reduce the intercell interference to peripheral base stations, and

a decision of whether to transmit a response of passively accepting the request when receiving a request of implementing the transmission method which reducing the intercell interference or implementing the transmission method which does not reduce the intercell interference from peripheral base stations.

6. In a radio communications system composed of plural base stations,
a base station including a radio communications unit to a terminal, and backhaul communications unit to communicate with another base station, a gateway, and a remote controller, the base station comprising:

a terminal distribution checking unit which obtains one or plural items of information among reception SNR at a terminal, reception SIR at a terminal, reception RSSI at a terminal, propagation loss between base station and terminal and terminal position information from an uplink control signal the terminal sends with the radio communications unit, finds a physical value obtained by processing the obtained value for each terminal, make a threshold decision for an evaluation function using the physical value as a variable and determines whether there is a need to execute intercell interference reduction for each terminal;

an intercell interference reduction execution determination unit which totals the number of terminals which need to execute intercell interference reduction or the proportion of the number of the terminals to the number of all terminals belonging to the base station from the output of the terminal distribution checking unit and by a threshold decision for the totaled results, determines whether the base station executes intercell interference reduction; and

an intercell interference reduction coordination unit which makes a request of implementing the transmission method which reduces intercell interference or the transmission method which does not reduce intercell interference to peripheral base stations of the corresponding base station based on the output of the intercell interference reduction execution determination unit,

which, when receiving the request from the peripheral base stations, sends a response to the request that the request is accepted or the request is not accepted to the base station which is the request sender based on the output of the own intercell interference reduction execution determination unit, and
which instructs the implementation of the transmission method which reduce the intercell interference or the transmission method which does not reduce the intercell interference to the radio communications unit based on the request and the contents of the response.

7. The base station of claim 6,
wherein the output of the intercell interference reduction execution determination unit is sent to the gateway or the remote controller using the backhaul communications unit;
wherein the gateway or the remote controller notifies the corresponding base station of the result of determining whether the corresponding base station selects the transmission method which reduces the intercell interference or the transmission method which does not reduce the intercell interference based on the output of the intercell interference reduction execution determination units of plural base stations; and
wherein the base station has an output control unit instructs the radio communications unit to implement the transmission method which reduces the intercell interference or the transmission method which does not reduce the intercell interference based of the notification result received by the backhaul communications unit.

8. A radio communications system composed of plural base stations, and including at least one of a gateway that performs protocol conversion between the radio communications network and a core network composed of plural base stations and a remote controller which remotely manages and controls plural base stations,
wherein the backhaul communications unit has a function of receiving the output of the intercell interference reduction execution determination unit from the plural base stations claimed in claim 7 and a function of sending the result of determining whether to select the transmission method which reduces the intercell interference or the transmission method which does not reduce the intercell interference to the base station claimed in claim 7, and
wherein the gateway or the remote controller has a intercell interference reduction coordination unit which collects the outputs of the intercell interference reduction execution determination units from the plural base stations, and based on the collected outputs, and determines whether each base station selects the transmission method which reduces the intercell interference or the transmission method which does not reduce the intercell interference.

FIG. 1

# FIG. 2A

CASE OF NORMAL POWER ALLOCATION

# FIG. 2B

CASE WHERE REDUCTION IN
INTERFERENCE BETWEEN NODES IS INTENDED.

# FIG. 3A

# FIG. 3B

TRANSMISSION POWER

BASE STATION NO. 1

AXIS 2 (FREQUENCY, TIME, OR SPACE)

AXIS 1 (FREQUENCY, TIME, OR SPACE)

1  2  3

A B C

TRANSMISSION POWER

BASE STATION NO. 2

AXIS 2 (FREQUENCY, TIME, OR SPACE)

AXIS 1 (FREQUENCY, TIME, OR SPACE)

1  2  3

A B C

TRANSMISSION POWER

BASE STATION NO. 3

AXIS 2 (FREQUENCY, TIME, OR SPACE)

AXIS 1 (FREQUENCY, TIME, OR SPACE)

1  2  3

A B C

# FIG. 4

# FIG. 5

# FIG. 6

# FIG. 7

101

101

202

202

| BACKHAUL COMMUNICATION UNIT |

| BACKHAUL COMMUNICATION UNIT |

109

109

| INTERCELL INTERFERENCE REDUCTION COORDINATION UNIT |

| INTERCELL INTERFERENCE REDUCTION COORDINATION UNIT |

108

108

| INTERCELL INTERFERENCE REDUCTION EXECUTION DETERMINATION UNIT |

| INTERCELL INTERFERENCE REDUCTION EXECUTION DETERMINATION UNIT |

107

107

| TERMINAL DISTRIBUTION CHECKING UNIT |

| TERMINAL DISTRIBUTION CHECKING UNIT |

201

201

| RADIO COMMUNICATION UNIT |

| RADIO COMMUNICATION UNIT |

102

102

## FIG. 8A

| TERMINAL ID | TERMINAL RECEIVED SIR | TERMINAL RECEIVED SNR |
|---|---|---|
| 1 | 15.0 [dB] | 20.0 [dB] |
| 2 | 0.0 [dB] | 3.0 [dB] |
| 3 | 0.0 [dB] | 10.0 [dB] |

## FIG. 8B

| TERMINAL ID | TERMINAL RECEIVED SIR | RSSI |
|---|---|---|
| 1 | 15.0 [dB] | -80 [dBm] |
| 2 | 0.0 [dB] | -97 [dBm] |
| 3 | 0.0 [dB] | -90 [dBm] |

## FIG. 8C

| TERMINAL ID | TERMINAL RECEIVED SIR | PROPAGATION ATTENUATION |
|---|---|---|
| 1 | 15.0 [dB] | 110 [dB] |
| 2 | 0.0 [dB] | 127 [dB] |
| 3 | 0.0 [dB] | 120 [dB] |

## FIG. 8D

| TERMINAL ID | DISTANCE UP TO A PREFERRED BASE STATION | DISTANCE UP TO THE NEAREST INTERFERENCE BASE STATION |
|---|---|---|
| 1 | 200 [m] | 1800 [m] |
| 2 | 900 [m] | 1000 [m] |
| 3 | 900 [m] | 1300 [m] |

# FIG. 9

S1001
TERMINAL INDEX
IS INITIALIZED

S1002
DOES THE RELEVANT
TERMINAL SATISFY
$f(\alpha, \beta) > \gamma$?  —— NO

YES  S1003

THE INTERCELL INTERFERENCE
REDUCTION REQUEST FLAG OF
THE RELEVANT TERMINAL IS
SET TO 1

S1004
THE INTERCELL INTERFERENCE
REDUCTION REQUEST FLAG OF
THE RELEVANT TERMINAL IS
SET TO 0

S1005
THE TERMINAL INDEX
IS UPDATED

S1006
NO  IS EVALUATION OF
ALL THE TERMINALS
COMPLETED?

YES

END OF THRESHOLD DETERMINATION

## FIG. 10A

| TERMINAL ID | INTERCELL INTERFERENCE REDUCTION REQUEST FLAG | TERMINAL RECEIVED SIR | TERMINAL RECEIVED SNR |
|---|---|---|---|
| 1 | 0 | 15.0 [dB] | 20.0 [dB] |
| 2 | 1 | 0.0 [dB] | 3.0 [dB] |
| 3 | 1 | 0.0 [dB] | 10.0 [dB] |

## FIG. 10B

| TERMINAL ID | INTERCELL INTERFERENCE REDUCTION REQUEST FLAG | TERMINAL RECEIVED SIR | RSSI |
|---|---|---|---|
| 1 | 0 | 15.0 [dB] | −80 [dBm] |
| 2 | 1 | 0.0 [dB] | −97 [dBm] |
| 3 | 1 | 0.0 [dB] | −90 [dBm] |

## FIG. 10C

| TERMINAL ID | INTERCELL INTERFERENCE REDUCTION REQUEST FLAG | TERMINAL RECEIVED SIR | PROPAGATION ATTENUATION |
|---|---|---|---|
| 1 | 0 | 15.0 [dB] | 110 [dB] |
| 2 | 1 | 0.0 [dB] | 127 [dB] |
| 3 | 1 | 0.0 [dB] | 120 [dB] |

## FIG. 10D

| TERMINAL ID | INTERCELL INTERFERENCE REDUCTION REQUEST FLAG | DISTANCE UP TO A PREFERRED BASE STATION | DISTANCE UP TO THE NEAREST INTERFERENCE BASE STATION |
|---|---|---|---|
| 1 | 0 | 200 [m] | 1800 [m] |
| 2 | 1 | 900 [m] | 1000 [m] |
| 3 | 1 | 900 [m] | 1300 [m] |

# FIG. 11

COUNTING OF THE NUMBER N OF THE TERMINALS HAVING THE INTERCELL INTERFERENCE REDUCTION REQUEST FLAG DESIGNATED AS 1, RESPECTIVELY — S1101

DOES THE NUMBER N OF THE TERMINALS EXCEED A FIRST THRESHOLD? — S1102

NO

YES — S1103

THE POLICY UNDER A IS DETERMINED AS VALID

THE POLICY UNDER A IS DETERMINED AS INVALID — S1104

DOES THE NUMBER N OF THE TERMINALS FALL SHORT OF A SECOND THRESHOLD? — S1105

NO

YES — S1106

THE POLICY UNDER B IS DETERMINED AS VALID

THE POLICY UNDER B IS DETERMINED AS INVALID — S1107

DOES THE NUMBER N OF THE TERMINALS EXCEED A THIRD THRESHOLD? — S1108

NO

YES — S1109

THE POLICY UNDER C IS DETERMINED AS VALID

THE POLICY UNDER C IS DETERMINED AS INVALID — S1110

DOES THE NUMBER N OF THE TERMINALS FALL SHORT OF A FOURTH THRESHOLD? — S1111

NO

YES — S1112

THE POLICY UNDER D IS DETERMINED AS VALID

THE POLICY UNDER D IS DETERMINED AS INVALID — S1113

END

# FIG. 12

| BASE STATION ID 1 | 1 |
|---|---|
| TOTAL NUMBER OF THE TERMINALS IN COMMUNICATION WITH THE BASE STATION | 50 |
| NUMBER OF THE TERMINALS EACH HAVING THE INTERCELL INTERFERENCE REDUCTION REQUEST FLAG 1 | 24 |
| PROPORTION OF THE NUMBER OF THE TERMINALS EACH HAVING THE INTERCELL INTERFERENCE REDUCTION REQUEST FLAG 1 TO THE TOTAL NUMBER OF THE TERMINALS | 48% |
| POLICY A (ACTIVE EXECUTION) | INVALID |
| POLICY B (ACTIVE STOPPAGE) | INVALID |
| POLICY C (PASSIVE EXECUTION) | VALID |
| POLICY D (PASSIVE STOPPAGE) | VALID |

# FIG. 13A

THE NUMBER OF THE TERMINALS
EACH HAVING THE INTERCELL
INTERFERENCE REDUCTION
REQUEST FLAG 1

PREFERABLE REGION FOR
THE INTERCELL INTERFERENCE
REDUCTION

FIRST THRESHOLD FOR USE WHEN
THE BASE STATION WORKS ON
A PERIPHERAL BASE STATION TO
A REQUEST FOR EXECUTION OF
INTERCELL INTERFERENCE REDUCTION

THIRD THRESHOLD FOR USE IN
EXECUTION OF INTERCELL
INTERFERENCE REDUCTION WHEN
A PERIPHERAL BASE STATION WORKS
ON THE BASE STATION TO A REQUEST
FOR EXECUTION OF INTERCELL
INTERFERENCE REDUCTION

UN-PREFERABLE REGION FOR
THE INTERCELL INTERFERENCE
REDUCTION

# FIG. 13B

THE NUMBER OF THE TERMINALS
EACH HAVING THE INTERCELL
INTERFERENCE REDUCTION
REQUEST FLAG 1

PREFERABLE REGION FOR
THE INTERCELL INTERFERENCE
REDUCTION

FOURTH THRESHOLD FOR USE IN
STOPPING INTERCELL INTERFERENCE
REDUCTION WHEN A PERIPHERAL BASE
STATION WORKS ON THE BASE STATION
TO REQUEST FOR STOPPAGE OF
INTERCELL INTERFERENCE REDUCTION

SECOND THRESHOLD FOR USE WHEN
THE BASE STATION WORKS ON
A PERIPHERAL BASE STATION TO
REQUEST FOR STOPPAGE OF
INTERCELL INTERFERENCE REDUCTION

UN-PREFERABLE REGION FOR
THE INTERCELL INTERFERENCE
REDUCTION

# FIG. 14

BASE STATION ACTIVATION

AN EXECUTION STATE OF INTERCELL INTERFERENCE REDUCTION IS INITIALIZED TO "NON-EXECUTION" — S1201

IS THE PRESENT STATE OF THE INTERCELL INTERFERENCE REDUCTION "EXECUTION"? — S1202

YES

NO

COORDINATION PROCESSING WHEN THE EXECUTION STATE OF THE INTERCELL INTERFERENCE REDUCTION IS "EXECUTION" — S1203

COORDINATION PROCESSING WHEN THE EXECUTION STATE OF THE INTERCELL INTERFERENCE REDUCTION IS "NON-EXECUTION" — S1204

THE EXECUTION STATE OF THE INTERCELL INTERFERENCE REDUCTION IS CHANGED TO "NON-EXECUTION"? — S1205

YES  YES

THE EXECUTION STATE OF THE INTERCELL INTERFERENCE REDUCTION IS CHANGED TO "EXECUTION"? — S1206

NO  S1207

NO  S1208

THE BASE STATION ISSUES A COMMAND FOR "EXECUTION" OF THE INTERCELL INTERFERENCE REDUCTION TO THE RADIO COMMUNICATION UNIT

THE BASE STATION ISSUES A COMMAND FOR "NON-EXECUTION" OF THE INTERCELL INTERFERENCE REDUCTION TO THE RADIO COMMUNICATION UNIT

FIG. 15

*FIG. 16*

S1202

S1401 — IS THE POLICY A (ACTIVE EXECUTION) VALID? — NO / YES

S1402 — A REQUEST FOR EXECUTION OF THE INTERCELL INTERFERENCE REDUCTION IS MADE TO THE PERIPHERAL BASE STATION

S1403 — HAS A REQUEST FOR EXECUTION OF THE INTERCELL INTERFERENCE REDUCTION BEEN RECEIVED FROM THE PERIPHERAL BASE STATION? — NO / YES

S1404 — IS THE POLICY C (PASSIVE EXECUTION) VALID? — NO / YES

S1405 — AN OK RESPONSE TO THE REQUEST FOR THE EXECUTION OF THE INTERCELL INTERFERENCE REDUCTION, RECEIVED FROM THE PERIPHERAL BASE STATION, IS TRANSMITTED

S1406 — AN NG RESPONSE TO THE REQUEST FOR EXECUTION OF THE INTERCELL INTERFERENCE REDUCTION, RECEIVED FROM THE PERIPHERAL BASE STATION, IS TRANSMITTED

S1407 — HAS A REQUEST FOR STOPPAGE OF THE INTERCELL INTERFERENCE REDUCTION BEEN RECEIVED FROM THE PERIPHERAL BASE STATION? — NO / YES

S1408 — AN OK RESPONSE IS TRANSMITTED TO THE REQUEST FOR STOPPAGE OF THE INTERCELL INTERFERENCE REDUCTION, RECEIVED FROM THE PERIPHERAL BASE STATION

S1409 — HAS AN OK RESPONSE TO THE REQUEST FOR EXECUTION OF THE INTERCELL INTERFERENCE REDUCTION BEEN RECEIVED FROM THE PERIPHERAL BASE STATION? — NO / YES

S1410 — A COMMAND FOR EXECUTION OF THE INTERCELL INTERFERENCE REDUCTION IS TRANSMITTED TO THE BASE STATION HAVING TRANSMITTED THE OK RESPONSE

S1411 — THE EXECUTION STATE OF THE INTERCELL INTERFERENCE REDUCTION IS CAUSED TO UNDERGO TRANSITION TO "EXECUTION"

S1412 — HAS A COMMAND FOR EXECUTION OF THE INTERCELL INTERFERENCE REDUCTION BEEN RECEIVED FROM THE PERIPHERAL BASE STATION? — NO / YES

S1413 — THE EXECUTION STATE OF THE INTERCELL INTERFERENCE REDUCTION IS CAUSED TO UNDERGO TRANSITION TO "EXECUTION"

S1206

# FIG. 17

| TERMINAL ID | LATITUDE | LONGITUDE |
|---|---|---|
| 2 | N. L.<br>36° 10' 0" 0000 | Long.<br>139° 50' 0" 0000E. |
| 3 | N. L.<br>36° 10' 0" 0000 | Long.<br>139° 51' 0" 0000E. |
| 4 | N. L.<br>36° 10' 0" 0000 | Long.<br>139° 49' 0" 0000E. |
| 5 | N. L.<br>36° 11' 0" 0000 | Long.<br>139° 50' 0" 0000E. |

# FIG. 18

## FIG. 19

A BASE STATION REQUESTING FOR ACTIVE EXECUTION

103

102

101

REQUEST FOR EXECUTION

REQUEST FOR EXECUTION

OK RESPONSE

NG RESPONSE

ACK

COMMAND FOR EXECUTION

A PERIPHERAL BASE STATION PERFORMING PASSIVE EXECUTION
(A BASE STATION SENDING BACK AN OK RESPONSE)

A PERIPHERAL BASE STATION HAVING NO NEED FOR INTERCELL INTERFERENCE REDUCTION
(A BASE STATION SENDING BACK AN NG RESPONSE)

## FIG. 20

## FIG. 21

| BASE STATION | 1 | | 2 | |
|---|---|---|---|---|
| EXECUTION STATE OF INTERCELL INTERFERENCE REDUCTION | NON-EXECUTION | | NON-EXECUTION | |
| PERIPHERAL BASE STATIONS AS OPPOSITE NUMBERS | 2 | 3 | 1 | 3 |
| REQUEST FOR EXECUTION OF THE INTERCELL INTERFERENCE REDUCTION | TRANSMITTED | TRANSMITTED | RECEIVED | NONE |
| REQUEST FOR STOPPAGE OF THE INTERCELL INTERFERENCE REDUCTION | NONE | NONE | NONE | NONE |
| RESPONSE TO THE REQUEST | RECEIVED OK | RECEIVED NG | TRANSMITTED OK | NONE |
| COMMAND FOR EXECUTION OF THE INTERCELL INTERFERENCE REDUCTION | TRANSMITTED | NONE | RECEIVED | NONE |
| COMMAND FOR STOPPAGE OF THE INTERCELL INTERFERENCE REDUCTION | NONE | NONE | NONE | NONE |
| ACK | RECEIVED | NONE | TRANSMITTED | NONE |

EP 2 224 765 A2

## FIG. 22

TERMINAL      BASE STATION      GATE WAY      BASE STATION

REQUEST FOR TRANSMISSION OF DETERMINATION RESULTS

~S1601 REQUEST FOR TRANSMISSION OF DETERMINATION RESULTS

REQUEST FOR TRANSMISSION OF DETERMINATION RESULTS

~S1502 MEASURING OF INFORMATION

REQUEST FOR INFORMATION ~S1501

REQUEST FOR INFORMATION

REQUEST FOR INFORMATION

RESPONSE WITH INFORMATION

TERMINAL DISTRIBUTION CHECKING ~S1503

TERMINAL DISTRIBUTION CHECKING

DETERMINATION ON EXECUTION OF INTERCELL INTERFERENCE REDUCTION ~S1504

DETERMINATION ON EXECUTION OF INTERCELL INTERFERENCE REDUCTION

REPORT OF DETERMINATION RESULTS    REPORT OF DETERMINATION RESULTS

AGGREGATION OF THE DETERMINATION RESULTS ~S1602

NOTIFICATION OF THE LATEST EXECUTION STATE

EXECUTION STATE TRANSITION PROCESSING FOR THE RESPECTIVE BASE STATIONS

NOTIFICATION OF THE LATEST EXECUTION STATE

EXECUTION STATE TRANSITION TO EXECUTION/NON-EXECUTION ~S1509

S1603

EXECUTION STATE TRANSITION TO EXECUTION/NON-EXECUTION

ACK      ACK

REQUEST FOR TRANSMISSION OF DETERMINATION RESULTS

REQUEST FOR TRANSMISSION OF DETERMINATION RESULTS

REQUEST FOR TRANSMISSION OF DETERMINATION RESULTS

REPEATED THEREAFTER    REPEATED THEREAFTER    REPEATED THEREAFTER    REPEATED THEREAFTER

EP 2 224 765 A2

EP 2 224 765 A2

## FIG. 23

106

105

| REMOTE CONTROLLER | AGW | TERMINAL DISTRIBUTION CHECKING UNIT |

112    104    107

INTERCELL INTERFERENCE REDUCTION EXECUTION DETERMINATION UNIT

108

INTERCELL INTERFERENCE REDUCTION COORDINATION UNIT

109

101    101    101

102    102    102    102    102    102

## FIG. 24

303

PROGRAM FOR
INTERCELL INTERFERENCE REDUCTION
COORDINATION UNIT

PROGRAM FOR
INTERCELL INTERFERENCE REDUCTION
EXECUTION DETERMINATION UNIT

PROGRAM FOR
TERMINAL DISTRIBUTION
CHECKING UNIT

301 202 302

NETWORK
INTERFACE

PROCESSOR

201

304

LOGIC
CIRCUIT

305

ANALOG
CIRCUIT

306

303

PROGRAM FOR
INTERCELL INTERFERENCE REDUCTION
COORDINATION UNIT

PROGRAM FOR
INTERCELL INTERFERENCE REDUCTION
EXECUTION DETERMINATION UNIT

PROGRAM FOR
TERMINAL DISTRIBUTION
CHECKING UNIT

301 202 302

NETWORK
INTERFACE

PROCESSOR

201

304

LOGIC
CIRCUIT

305

ANALOG
CIRCUIT

306

# FIG. 25

303

PROGRAM FOR OUTPUT CONTROL UNIT

PROGRAM FOR
INTERCELL INTERFERENCE REDUCTION
EXECUTION DETERMINATION UNIT

PROGRAM FOR TERMINAL DISTRIBUTION
CHECKING UNIT

301 202 302 201

NETWORK
INTERFACE

PROCESSOR

LOGIC
CIRCUIT 304

ANALOG
CIRCUIT 305 306

111

301 202 302 303

NETWORK
INTERFACE

PROCESSOR

PROGRAM FOR
INTERCELL INTERFERENCE REDUCTION
COORDINATION UNIT